# EUROPEAN PATENT SPECIFICATION

(11) **EP 4 191 990 B1**
(45) Date of publication and mention of the grant of the patent: **26.03.2025**
(21) Application number: 21860219.1
(22) Date of filing: 17.08.2021
(51) Int. Cl.: H04M 7/00, H04W 4/16, H04L 65/1023, H04L 69/24, H04L 65/1096

(54) **MEDIA RESOURCE PLAYBACK METHOD AND SYSTEM**
MEDIENRESSOURCENWIEDERGABEVERFAHREN UND SYSTEM
PROCÉDÉ DE LECTURE DE RESSOURCE DE MÉDIAS ET SYSTÈME

(30) Priority: 31.08.2020 CN 202010901216
(43) Date of publication of application: 07.06.2023
(73) Proprietor: Huawei Technologies Co., Ltd., Shenzhen, Guangdong 518129 (CN)
(72) Inventor: WU, Kanghua, Shenzhen, Guangdong 518129 (CN); YANG, Guozhong, Shenzhen, Guangdong 518129 (CN); WANG, Dong, Shenzhen, Guangdong 518129 (CN); WU, Shisheng, Shenzhen, Guangdong 518129 (CN)
(74) Representative: MERH-IP Matias Erny Reichl Hoffmann Patentanwälte PartG mbB
(86) International application number: PCT/CN2021/113115
(87) International publication number: WO 2022/042381

(56) References cited:
- EP-A1- 2 330 786
- EP-A1- 2 408 164
- CN-A- 101 400 190
- CN-A- 101 404 787
- CN-A- 104 683 602
- CN-A- 104 683 602
- CN-A- 110 891 123
- CN-A- 111 491 062
- JP-A- 2017 028 591
- JP-A- 2020 022 053
- US-A1- 2010 226 483

## Description

This application claims priority to Chinese Patent Application No. 202010901216.0, filed on August 31, 2020 and entitled "MEDIA RESOURCE PLAYING METHOD, RELATED APPARATUS, AND SYSTEM".

### TECHNICAL FIELD

This application relates to the field of communications technologies, and in particular, to a media resource playing method, a related apparatus, and a system.

### BACKGROUND

With continuous development of communication technologies, a voice over long term evolution (voice over long term evolution, VoLTE) technology gradually becomes a part of people's life, and people may enjoy various types of media resource experience. For example, when making a voice call, a user may enjoy video experience, for example, a video customized ringback tone and a video customer service, so that a waiting phase before the call becomes more interesting. This greatly improves call experience of the user.

Currently, a media resource playing method is usually to play a media resource based on a CT (communication technology, communication technology) domain. The CT domain may also be referred to as a telecommunication domain, and a corresponding process may be as follows: A calling terminal initiates a call to a called terminal, and after the called terminal rings, a media server in the CT domain performs media negotiation with the calling terminal, to send a ringing message to the calling terminal, and send the media resource to the calling terminal based on a negotiation result.

In the foregoing solution, when the media resource is played, a call procedure of the CT domain is related. Because playing of the media resource is associated with the call procedure, once a piece of signaling of the call procedure is faulty, the entire call procedure is affected. This easily causes a call connection failure problem and reduces communication efficiency.
Document EP 2 408 164 A1 relates to a media resource playing system, which comprises a business server, a media resource client side and a management function client side. The business server comprises a play control unit for implementing media resource location and media play control, a business management unit for storing and/or managing business-related configuration information, a resource management unit for storing and managing media resources and relative information; the media resource client side is used for implementing media resource play and media play control; and the management function client side is used for managing user data and personnel media resources.
Dcoument CN 104 683 602 A relates to a The invention provides a music and image color ring back tone processing method, which comprises the steps of acquiring a first request message and a second request message, wherein the first request message is used for starting a call by a calling terminal to a called terminal, and the second request message is launched by the calling terminal to a music and image WEB server in a music and image service platform; according to the first request message, transmitting the call to the called terminal; according to a music and image color ring back tone customization message of the calling terminal, transmitting an image link message requested by the second request message to the calling terminal, so as to allow the calling terminal to download the images according to the link message; and controlling a media server in the music and image service platform and the calling terminal to be linked with each other so as to play the color ring back tone.
Document EP 2 330 786 A1 relates to a media resource system, which comprises a service processing module, a user configuration information module and a resource storage and management module, wherein the service processing module is used for logically processing the media resource system; the user configuration information module is used for arranging and/or storing user configuration information related to services; and the resource storage and management module is used for storing and managing the media resources.
Document US 2009/262915 A1 relates to a method for implementing Customized Ringing Signal (CRS) services, which includes: receiving a call request initiated by a caller terminal; obtaining a policy of playing a CRS tone according to the call request, where the policy is a policy of playing a CRS tone, namely, a caller CRS tone or a callee CRS tone, or a policy of filtering the CRS tone; and playing the CRS tone to a callee according to the policy.

### SUMMARY

Embodiments of this application provide a media resource playing method, a related apparatus, and a system, to avoid a problem of a call connection failure caused by incomplete message processing in an interaction process, so that communication efficiency is improved. The present invention is defined by the appended claims. In the following, parts of the description and drawings referring to former embodiments which do not necessarily comprise all features to implement embodiments of the claimed invention are understood to not represent embodiments of the invention but to relate to be examples useful for understanding the embodiments of the invention. Technical solutions of the media resource playing method, the related apparatus, and the system are as follows:

According to a first aspect, a media resource playing method applied to a calling terminal is provided. An implementation process of the method may be as follows:

The calling terminal initiates a call to a called terminal;
sends a resource obtaining request to a first media server via a target application client, where the resource obtaining request carries related information of the call;
receives address information of a first media resource returned by the first media server based on the resource obtaining request, where the first media resource matches the related information; and
plays the first media resource based on the address information after receiving a ringing message.

In the foregoing embodiment, a media resource may be obtained and played through interaction between the target application client and the first media server, and a call procedure of a CT domain is not affected. In this way, a problem such as a call connection failure that may be caused in an interaction process is avoided, a media resource playing procedure is simplified, and communication efficiency is improved.

In a possible implementation, the first media server is a server in an internet technology (internet technology, IT) domain. In the foregoing embodiment, a media resource in the IT domain is obtained and played by using a media server in the IT domain, so that impact on communication in a CT domain is avoided, and normal communication is ensured.

In a possible implementation, the first media server performs communication by using either a mobile internet or a home broadband fixed network. In the foregoing embodiment, the first media server may implement communication by using the mobile internet or the home broadband fixed network. With popularization of a 4G network and construction of a 5G network, network bandwidths of the mobile internet and the home broadband fixed network are both of great availability, and delays are small, so that communication security and reliability can be ensured, and communication efficiency is high.

In a possible implementation, before the plays the first media resource based on the address information after receiving a ringing message, the method further includes: if it is determined that a first media negotiation message is not received, performing the step of playing the first media resource, where the first media negotiation message is for performing media negotiation between a second media server and the calling terminal, and the second media server is in a communication technology CT domain.

In the foregoing embodiment, a media resource in the IT domain can be used as a supplement to a media resource in the CT domain. When no media resource in the CT domain is played, the terminal plays the media resource in the IT domain by using the target application client. Therefore, a user who does not subscribe to the media resource in the CT domain can also play a media resource in a process of waiting for a call to be connected.

In a possible implementation, if setting information of the calling terminal indicates to play a media resource from the first media server, the step of playing the first media resource is performed.

In the foregoing embodiment, the calling user may further set a domain from which a media resource is to be played, so that the calling terminal can play the media resource in the specified domain based on the setting information. If the setting information indicates to play a media resource from the IT domain during call establishment, the calling terminal obtains and plays the first media resource regardless of whether a media resource in the CT domain exists in the current call.

In a possible implementation, before the plays the first media resource based on the address information after receiving a ringing message, the method further includes: if it is determined that a first media negotiation message is not received, and setting information of the calling terminal indicates to play a media resource from the first media server, performing the step of playing the first media resource.

In the foregoing embodiment, a calling user may perform setting on the calling terminal, to play a media resource in the IT domain during call establishment, so that the media resource in the IT domain is played during calling based on a personalized setting of the user.

In a possible implementation, before the plays the first media resource based on the address information after receiving a ringing message, the method further includes: if it is determined that a first media negotiation message is received, performing the step of playing the first media resource. In the foregoing embodiment, when a media resource in the CT domain is subscribed to, a media resource in the IT domain is preferentially played, so that the media resource in the IT domain can be used as a substitute for the media resource in the CT domain. A playing manner of the media resource played by using the target application client is more flexible.

In a possible implementation, before the plays the first media resource based on the address information after receiving a ringing message, the method further includes: if it is determined that a first media negotiation message is received, and setting information of the calling terminal indicates to play a media resource from the first media server, performing the step of playing the first media resource. In the foregoing embodiment, a calling user may set the first media resource to be preferentially played on the calling terminal, to play a media resource in the IT domain. When a media resource in the CT domain can be subscribed to, the media resource in the IT domain may be played during calling based on a personalized setting of the user.

In a possible implementation, before the plays the first media resource based on the address information after receiving a ringing message, the method further includes: if it is determined that a first media negotiation message is received, and setting information of the calling terminal indicates to play a media resource from the first media server, shielding a second media resource of a second media server.

In the foregoing embodiment, the second media resource of the second media server is shielded during call establishment, to suppress playing a media resource in the CT domain. Further, the target application client plays a media resource in the IT domain, to ensure that only the first media resource is played during the call establishment, and avoid interference that may be caused by simultaneously playing a plurality of media resources.

In a possible implementation, when initiating the call to the called terminal, the calling terminal obtains the setting information. If the calling terminal determines, based on the setting information, to play only a media resource in the IT domain, a generated calling request (INVITE) does not carry a video identifier of a contact header field, where the video identifier of the contact header field indicates that media playing in the CT domain is supported. In this way, the video identifier of the contact header field is not carried when the call is initiated, so that media negotiation in the CT domain is avoided. In addition, the second media server does not send the second media resource to the calling terminal, so that a network resource is saved.

In the technical solution provided in this application, a media resource may be obtained and played through interaction between the target application client and the first media server, and a call procedure of the CT domain is not affected. In this way, a problem such as a call connection failure that may be caused in an interaction process is avoided, a media resource playing procedure is simplified, and communication efficiency is improved. Further, a function of setting a playing source is provided, so that a personalization degree of media playing can further be improved, and user experience is improved.

In a possible implementation, after the calling terminal initiates the call to the called terminal, the method further includes:

if setting information of the calling terminal indicates to play media resources from the first media server and a second media server, playing a second media resource sent by the second media server.

In the foregoing embodiment, when there is a media resource in the IT domain and a media resource in the CT domain in the current call, both the media resources in the CT domain and the media resources in the IT domain are played. This brings new experience and higher selectivity to a user, and improves experience and a participation degree of the user in a video customized ringback tone service. A calling user may perform setting on the calling terminal, to simultaneously play the media resources in the IT domain and the media resources in the CT domain. This brings new experience and higher selectivity to the user, and improves experience and a participation degree of the user in the video customized ringback tone service.

In a possible implementation, the first media resource is played in a full-screen mode, and the second media resource is played in a floating window mode and a silent mode; the second media resource is played in a full-screen mode, and the first media resource is played in a floating window mode and a silent mode; or both the first media resource and the second media resource are played in a floating window mode, and at least one of the first media resource and the second media resource is in a silent mode.

In the first two manners in the foregoing embodiment, one media resource is played in a full screen, and the other media resource is played in a floating window, so that the two media resources can be clearly and intuitively displayed. In addition, one media resource is normally played (with sound) in the full screen, and the other media resource is silently played in the floating window, so that poor user experience caused by simultaneously playing two audio segments is avoided. In the third manner in the foregoing embodiment, the two media resources are separately played in a floating window, and the two media resources can also be clearly and intuitively displayed. In addition, because at least one of the media resources is silently played, auditory confusion caused by simultaneously playing two audio segments is avoided, and user experience is improved.

In a possible implementation, the method further includes: if a click operation on a floating window is detected, switching a media resource played on the floating window to play the media resource in the full-screen mode, and closing another media resource.

In the foregoing embodiment, in a process of watching a media resource, a calling user may perform a click operation on a floating window corresponding to a media resource that the calling user is interested in, play the media resource in a full screen, and close another media resource, so that the media resource that the calling user wants to watch can be reserved, to bring better watching experience to the calling user.

In a possible implementation, after the ringing message is received, the method further includes: shielding a third media resource that is sent by a telephony application server based on that the called terminal has rung. In the foregoing embodiment, the third media resource is shielded to suppress beep tones playing in the call, so that only audio of the first media resource is played during call establishment. Therefore, auditory confusion caused by simultaneously playing two audio segments is avoided, and user experience is improved.

In a possible implementation, the third media resource is either a locally stored media resource or a media resource sent by the telephony application server, and the telephony application server is a server in the CT domain. In the foregoing embodiment, the third media resource may be a media resource in the CT domain, or may be the locally stored media resource. After a to-be-played media resource is determined, the third media resource is directly shielded, so that the beep tones playing in the call can be suppressed.

In a possible implementation, the method further includes: displaying at least one interactive control on a play picture of a media resource; and if an interaction operation on any interactive control is detected, sending an interaction request to the first media server based on the interaction operation via the target application client, where the interaction request carries an interaction object and interaction content. For example, the interactive control is a like control displayed on the picture of the media resource, and is used by a user to perform an interaction operation.

In the foregoing embodiment, when a media resource is played during call establishment, interaction and control in a customized ringback tone scenario are implemented by providing a function control for interaction with the media resource, so that interaction flexibility is higher, interaction content is richer, and interest of a video customized ringback tone service is improved.

In a possible implementation, the method further includes: The calling terminal displays at least one call control control by using the target application client. The call control control is for invoking a call control function of the calling terminal, to perform call control, such as recording or pausing a call.

In a possible implementation, the method further includes: The calling terminal displays at least one media control control by using the target application client. The media control control is for controlling playing of a media resource, for example, pausing or fast-forwarding.

In a possible implementation, after the plays the first media resource based on the address information after receiving a ringing message, the method further includes: if an off-hook message of the called terminal is received, stopping playing the first media resource; and displaying a stop picture of the first media resource in a floating window. For example, the stop picture is a preset picture or a play picture corresponding to stopping playing. In the foregoing embodiment, picture displaying may still be retained after the call is established, to provide an entry for a user to perform a further operation, so that flexibility of media playing is improved.

In a possible implementation, after the displaying a stop picture of the first media resource in a floating window, the method further includes any one of the following:

If a click operation on the floating window is detected, the first media resource continues to be played. In the foregoing embodiment, if a calling user wants to continue to watch the first media resource, the calling user may click the floating window to continue to play the first media resource. The operation is convenient and simple. In addition, because the first media resource is a media resource in the IT domain, the target application client supports the first media resource in continuing to be played based on a play picture at a pause moment, so that the user can continue to watch a previous segment. This brings better watching experience to the user.

If a click operation on the floating window is detected, a portal website interface is displayed in the opened target application client. In the foregoing embodiment, if a calling user wants to access a portal website, the calling user may click the floating window to access the portal website. The operation is convenient and simple.

In a possible implementation, that the first media resource continues to be played if a click operation on the floating window is detected includes any one of the following:
if a click operation on the floating window is detected after the call is established, silently playing the first media resource; or
if a click operation on the floating window is detected after talking ends, normally playing the first media resource.

In the foregoing embodiment, a calling user may click the floating window at any moment after the call is established or after the talking ends, to continue to watch the first media resource. The calling terminal can perform playing in different manners depending on whether a moment corresponding to clicking of the calling user is after the call is established or after the talking ends. The first media resource is silently played after the call is established, so that the calling use can clearly hear talking content, and important talking content after the call is established is not missed. After the talking ends, the first media resource may be normally played, in other words, played in a non-silent manner.

In a possible implementation, after the displaying a stop picture of the first media resource in a floating window if it is determined, based on setting information of the calling terminal, to remain a display status of the first media resource after the call is established, the method further includes: if a closing operation on the floating window or screen-off is detected, closing the floating window.

In the foregoing embodiment, if a user does not want to continue watching the first media resource, the user may close the floating window by clicking a close button. In addition, when detecting screen-off, the calling terminal may also close the floating window.

In a possible implementation, after the plays the first media resource based on the address information, the method further includes: if a media switching instruction is received, playing a media resource next to the first media resource. In the foregoing embodiment, a plurality of media resources may be played during call establishment, and switching playing or rolling playing of the media resources may be flexibly implemented based on the media switching instruction, so that interest of a video customized ringback tone service is improved.

According to a second aspect, a media resource playing method applied to a calling terminal is provided. An implementation process of the method may be as follows:
The calling terminal initiates a call to a called terminal;
sends a resource obtaining request to a first media server via a target application client, where the resource obtaining request carries related information of the call;
receives address information of a first media resource returned by the first media server based on the resource obtaining request, where the first media resource matches the related information;
after receiving a ringing message of the called terminal, if it is determined that a first media negotiation message is received, plays a second media resource sent by a second media server, where the second media server is in a communication technology CT domain; and
sends a session end message to the first media server, where the session end message indicates that a session ends.

In the foregoing embodiment, if it is determined that the first media negotiation message is received, it may be determined that a media resource in the CT domain exists during the current call establishment. The calling terminal plays the media resource in the CT domain instead of a media resource in an IT domain, so that the media resource in the CT domain is normally played during the call establishment without being affected by another media resource. Therefore, a play conflict is avoided, and communication and audiovisual experience of a user is improved. In addition, the session end message is sent to the first media server, so that the first media server can release the first media resource, to avoid occupying a memory of the first media server.

In a possible implementation, the plays, if it is determined that a first media negotiation message is received, a second media resource sent by a second media server includes: if it is determined that the first media negotiation message is received, and setting information of the calling terminal indicates to play a media resource from the second media server, performing the step of playing the second media resource.

In the foregoing embodiment, a user is provided with a function of performing play setting based on a personal preference, so that subsequent ring tone play experience can satisfy a user requirement.

According to a third aspect, a media resource playing method applied to a first media server is provided. An implementation process of the method may be as follows:
receiving a resource obtaining request sent by a calling terminal via a target application client, and obtaining related information of a call carried in the resource obtaining request;
determining, based on the related information of the call, address information of a first media resource corresponding to the related information; and
returning the address information of the first media resource to the calling terminal.

In the foregoing embodiment, a media resource may be obtained and played through interaction between the target application client and the first media server, and a complex call procedure of a CT domain does not need to be used. In this way, a problem such as a call connection failure that may be caused in an interaction process is avoided, a media resource playing procedure is simplified, and communication efficiency is improved.

In a possible implementation, after the determining, based on the related information of the call, address information of a first media resource corresponding to the related information, the method further includes: pre-loading the first media resource.

In the foregoing embodiment, if the first media server loads the resource when the calling terminal device obtains the first media resource, a delay is caused. However, according to the foregoing pre-loading method, a delay problem of subsequent media resource playing can be optimized, and efficiency of obtaining the first media resource is improved. In other words, a problem of long play waiting time during subsequent media resource playing is not caused.

In a possible implementation, before the determining, based on the related information of the call, address information of a first media resource corresponding to the related information, the method further includes: authenticating a user based on the related information, and if the authentication succeeds, performing the steps of determining the first media resource and the address information.

In the foregoing embodiment, the user is authenticated to verify legality and validity of the user, so as to ensure subsequent secure playing of a media resource, so that security and reliability of playing a media resource in the IT domain are improved.

Optionally, the authentication includes authentication on user function information (which is also referred to as validity authentication). Optionally, the authentication further includes authentication on user identity information. The authentication on the user function information is to authenticate whether the user subscribes to a media resource. The authentication on the user identity information is to authenticate a user identity, for example, authenticate a called mobile phone number, to determine whether the mobile phone number is a valid mobile phone number. Optionally, authenticating the user is authenticating a calling user and/or a called user.

In a possible implementation, the authenticating a user based on the related information includes: authenticating a calling number or a called number based on the related information.

In the foregoing embodiment, not only a calling user may be authenticated, but also a called user may be authenticated. When one of the calling user and the called user does not subscribe to a media resource, the other one may be authenticated, to play the media resource in a ringing phase, so that call experience of the calling user is improved.

In a possible implementation, after the returning the address information of the first media resource to the calling terminal, the method further includes: if a session end message of the calling terminal is received, closing a session between the first media server and the calling terminal. In the foregoing embodiment, occupation of a resource such as a bandwidth channel can be avoided through a session release process.

In a possible implementation, after the returning the address information of the first media resource to the calling terminal, the method further includes: if a session end message of the calling terminal is received, releasing the first media resource pre-loaded by the first media server, where the session end message is for ending a session.

In the foregoing embodiment, after it is determined that playing of the first media resource ends, the first media server releases the first media resource, to avoid occupying a memory of the first media server. This improves a processing capability of the first media server.

According to a fourth aspect, a media resource playing apparatus is provided, configured to perform the foregoing media resource playing method. Specifically, the media resource playing apparatus includes a functional module configured to perform the media resource playing method provided in any one of the first aspect, the second aspect, the third aspect, or the optional manners of any one of the foregoing aspects.

According to a fifth aspect, a media resource playing method is provided. The method includes:
A calling terminal initiates a call to a called terminal, and the calling terminal sends a resource obtaining request to a first media server via a target application client, where the resource obtaining request carries related information of the call.

The first media server receives the resource obtaining request sent by the calling terminal via the target application client, and obtains the related information of the call carried in the resource obtaining request; determines, based on the related information of the call, address information of a first media resource corresponding to the related information; and returns the address information of the first media resource to the calling terminal.

The calling terminal receives the address information of the first media resource returned by the first media server based on the resource obtaining request, where the first media resource matches the related information; and plays the first media resource based on the address information after receiving a ringing message.

According to a sixth aspect, a media resource playing system is provided, where the system includes a calling terminal and a first media server, and the calling terminal and the first media server are configured to perform the media resource playing method according to the fifth aspect.

According to a seventh aspect, a terminal is provided, where the terminal includes a processor and a memory. The memory stores at least one piece of program code, and the program code is loaded and executed by the processor to implement the media resource playing method according to any one of the first aspect, the second aspect, or the optional manners of the first aspect and the second aspect.

According to an eighth aspect, a server is provided, where the server includes a processor and a memory. The memory stores at least one piece of program code, and the program code is loaded and executed by the processor to implement the media resource playing method according to any one of the third aspect or the optional manners of the third aspect.

According to a ninth aspect, a computer storage medium is provided, where the computer storage medium stores at least one piece of program code, and the program code is loaded and executed by a processor to implement the media resource playing method according to any one of the first aspect, the second aspect, the third aspect, or the optional manners of the foregoing aspects.

According to a tenth aspect, a computer program product is provided. When the computer program product runs on a computer, the computer is enabled to perform some or all steps of the media resource playing method according to any one of the first aspect, the second aspect, the third aspect, or the optional manners of the foregoing aspects.

### BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application, and a person of ordinary skill in the art may still derive other drawings from these accompanying drawings without creative efforts.
FIG. 1 is a diagram of an architecture of a media resource system according to an embodiment of this application;
FIG. 2 is a diagram of an architecture of a media resource system according to an embodiment of this application;
FIG. 3 is a diagram of a system architecture of a terminal according to an embodiment of this application;
FIG. 4 is a schematic diagram of a structure of a terminal according to an embodiment of this application;
FIG. 5 is a schematic diagram of a structure of a server according to an embodiment of this application;
FIG. 6A and FIG. 6B are a flowchart of a media resource playing method according to an embodiment of this application;
FIG. 7 is a flowchart of a media resource playing method according to an embodiment of this application;
FIG. 8 is a flowchart of a media resource playing method according to an embodiment of this application;
FIG. 9 is a schematic diagram of playing of a media resource according to an embodiment of this application;
FIG. 10 is a schematic diagram of playing of a media resource according to an embodiment of this application;
FIG. 11 is a flowchart of a call control method that is based on media resource playing according to an embodiment of this application;
FIG. 12 is a flowchart of an interaction method that is based on media resource playing according to an embodiment of this application;
FIG. 13 is a flowchart of a playing pause processing method that is based on media resource playing according to an embodiment of this application;
FIG. 14 is a schematic diagram of playing of a media resource according to an embodiment of this application;
FIG. 15 is a schematic diagram of playing of a media resource according to an embodiment of this application;
FIG. 16A and FIG. 16B are a flowchart of a media resource playing method according to an embodiment of this application;
FIG. 17A and FIG. 17B are a flowchart of a media resource playing method according to an embodiment of this application;
FIG. 18A and FIG. 18B are a flowchart of a media resource playing method according to an embodiment of this application;
FIG. 19 is a schematic diagram of a structure of a media resource playing apparatus according to an embodiment of this application; and
FIG. 20 is a schematic diagram of a structure of a media resource playing apparatus according to an embodiment of this application.

### DESCRIPTION OF EMBODIMENTS

The following further describes in detail embodiments of this application with reference to accompanying drawings.

Embodiments of this application are applicable to a 4th generation (4G) mobile communication network architecture, a 5th generation (5G) mobile communication network architecture, or a future network. For ease of description, the following describes a network architecture and a method procedure of the solutions by using a 4G-based VoLTE network as an example.

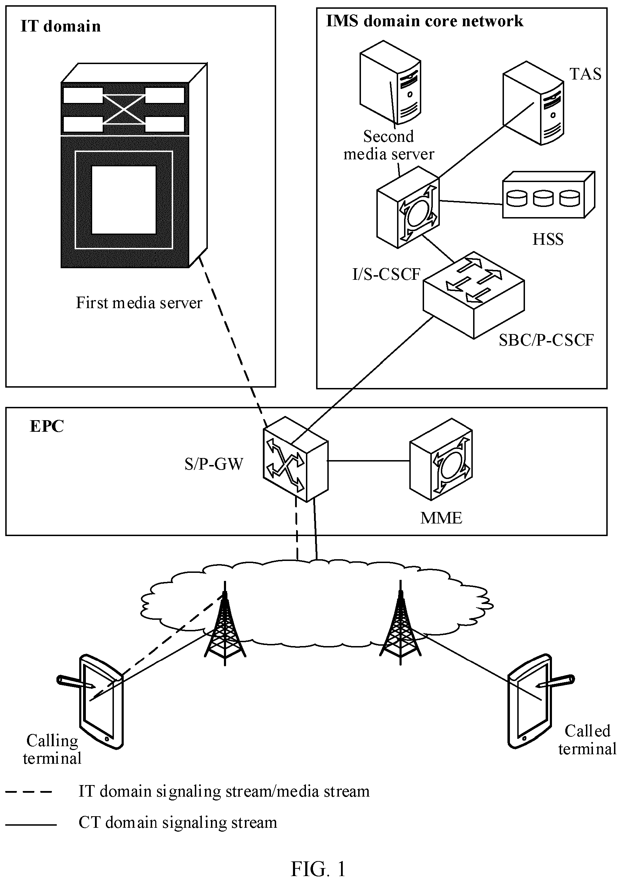

FIG. 1 is a diagram of an architecture of a media resource system according to an embodiment of this application. Refer to FIG. 1. The system may include a first media server in an IT domain, a network device in a CT domain, a calling terminal, and a called terminal.

The IT domain may also be referred to as an internet domain. The first media server is configured to provide a media resource service for a user, and can further provide media control, an interaction service, and the like based on media resource playing. The first media server further provides a visual interface entry, to provide a service such as media resource setting and management for the user. Optionally, the first media server stores user information, or is associated with a subscription database, and stores related user information, related information of a media resource, and the like by using the subscription database. In this embodiment of this application, an example in which the first media server is associated with the subscription database is used for description.

In this embodiment of this application, a target application client, for example, a video customized ringback tone application, is installed on the calling terminal. The calling terminal can obtain, by using the target application client, the media resource service provided by the first media server, that is, obtain a media resource provided by the first media server, and play the media resource based on an actual situation during call establishment.

The first media server provides the media resource service. A user can subscribe to the media resource service by using the target application client. For example, the user accesses a portal website of the first media server by using the target application client, performs an operation on the portal website, and selects a first media resource to be played during call establishment. After the subscription is completed, the first media server correspondingly stores the user information and resource information of the subscribed media resource into the subscription database, to subsequently provide the media resource service based on the stored information. Optionally, the first media server further provides a setting function. The user performs setting by using the target application client, to obtain setting information indicating a domain from which a media resource is to be played. For example, when both a media resource in the IT domain and a media resource in the CT domain exist, the two media resources are simultaneously played. After the setting is completed, the first media server generates the corresponding setting information and delivers the setting information to the target application client for storage. Alternatively, after the target application client is opened, the target application client obtains the setting information from the first media server and stores the setting information, to determine, based on the setting information, how to play a media resource.

Optionally, when the first media server performs signaling interaction with the calling terminal, a used transfer protocol is the hypertext transfer protocol (hypertext transfer protocol, HTTP) or the hypertext transfer protocol secure (hypertext transfer protocol secure, HTTPS). In this embodiment of this application, the first media server supports a plurality of transfer protocols. In comparison with a single signaling stream protocol in the CT domain, signaling interaction that is based on media resource playing can be implemented more conveniently and flexibly.

Optionally, when the first media server and the calling terminal perform media stream transmission, a used transfer protocol is the real-time messaging protocol (real-time messaging protocol, RTMP) or the reused HTTP streaming protocol (hypertext transfer protocol flash video, HTTP Flv). In this embodiment of this application, the first media server supports a plurality of transfer protocols. In comparison with a single media stream protocol in the CT domain, media resource playing can be implemented more conveniently and flexibly.

It should be noted that when the first media server interacts with the calling terminal, a signaling stream or a media stream in the IT domain is used. When the calling terminal interacts with a second media server, a signaling stream or a media stream in the CT domain is used. Correspondingly, when the first media server interacts with the calling terminal, if the HTTP protocol is used, an exchanged control message between the first media server and the calling terminal is an HTTP message, an HTTPS message, an HTTP response, or an HTTPS response, and a message data flow thereof is an IT domain signaling stream, for example, a hypertext markup language flow (hypertext markup language flow, HTML Flow). When a media resource is transmitted between the first media server and the calling terminal, a media data flow is an IT domain media stream, for example, an RTMP media stream or an HTTP Flv media stream.

Refer to FIG. 1. The calling terminal accesses the first media server through a gateway. The gateway may include a packet data network gateway (packet data network gateway, P-GW) device and a serving gateway (serving gateway, S-GW) device. The P-GW device and the S-GW device may be disposed together, and may be referred to as an "S/P-GW" device for short. Specifically, after initiating a call, the calling terminal sends a resource obtaining request to the S/P-GW via the target application client, and the S/P-GW sends the resource obtaining request to the first media server. In a process in which the calling terminal performs a CT domain call, the target application client accesses the first media server through an IT network, to obtain an IT domain media stream, and then plays, for a calling user in a ringing phase, a media resource in the IT domain, to implement an IT domain customized ringback tone service. It can be understood that media resource playing in the IT domain is performed during call establishment in the CT domain, and obtaining of the media resource is triggered by the call establishment in the CT domain. However, because interaction between the calling terminal and the first media server is performed through the IT domain, the call establishment in the CT domain is not affected, and normal call establishment can be ensured.

The CT domain may also be referred to as a telecommunication domain, and the CT domain implements communication by using an evolved packet core (evolved packet core, EPC), internet protocol multimedia subsystem (internet protocol multimedia subsystem, IMS) domain core network, and the like. The IMS domain core network includes several application servers (application servers, ASs), for example, the second media server. The second media server is configured to play a second media resource for a terminal. For example, the second media server is also referred to as a video customized ringback tone platform when providing a video customized ringback tone service. The second media server may include a media application server and a media resource server (media resource server, MRS). The media resource server is also referred to as a ringback tone platform. The media resource server is configured to provide a media resource such as a video customized ringback tone, a video customized ringing signal, a video advertisement, or a video customer service. For example, the media resource server makes and manages the foregoing media resource. The media application server and the media resource server may be integrated together or physically separated. The media application server processes a session initiation protocol (session initiation protocol, SIP) signaling message, and the media resource server provides an audio flow and/or a video flow for the calling terminal and/or the called terminal.

In addition, the IMS core network further includes a serving-call session control function (serving-call session control function, S-CSCF) device, an interrogating-call session control function (interrogating-call session control function, I-CSCF) device, a proxy-call session control function (proxy-call session control function, P-CSCF) device, a home subscriber server (home subscriber server, HSS) device, a session border controller (session border controller, SBC) device, and several application servers, such as a telephony application server (telephony application server, TAS), a multimedia telephony application server (multimedia telephony application server, MMTel AS), and a service centralization and continuity application server (service centralization and continuity application server, SCC AS). The I-CSCF device and the S-CSCF device may be disposed together, and may be referred to as an "I/S-CSCF" device for short. The SBC device and the P-CSCF device may be disposed together, and may be referred to as an "SBC/P-CSCF" device for short. The EPC may include a packet data network gateway P-GW device, a serving gateway S-GW device, and a mobility management entity (mobility management entity, MME) device.

The S/P-GW device is configured to provide functions of a serving gateway and a packet data network gateway logical entity. The S-GW is an anchor for local mobility, and is mainly oriented to a radio access network, to transmit service plane data. The P-GW is an anchor for an EPS, and is mainly oriented to another data network, to implement access and interaction with a plurality of public data networks. The S-GW device may be configured to connect the IMS core network to a wireless network, and the P-GW device may be configured to connect the IMS core network to an internet protocol (internet protocol, IP) network. The MME device is a core device in the EPC network, and provides a function of an MME logical entity.

As shown in FIG. 1, when the second media server interacts with the calling terminal, a message data flow is a CT domain signaling stream, in other words, a control message is a SIP message. When a media resource is transmitted, a media data flow is a CT domain media stream, in other words, an RTP media stream. A terminal accesses the IMS domain core network by using the S/P-GW in the EPC, to access the second media server. For example, in a call procedure, the calling terminal exchanges a SIP message with a network device in the IMS domain core network, and then the second media server performs a procedure such as media negotiation with the calling terminal. If a media resource in the CT domain exists in this call, the second media server pushes the second media resource to the calling terminal in a form of an RTP media stream.

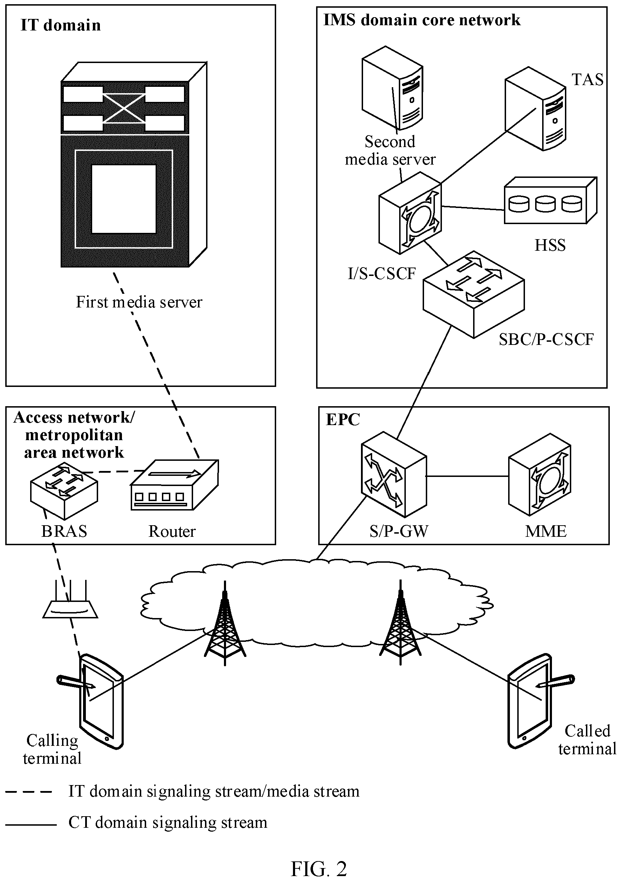

For the calling terminal, there are various network access manners. FIG. 1 is described by using an example in which the calling terminal accesses the network through a gateway. In another system architecture, the calling terminal may access the network through another network device, for example, over an access network or a metropolitan area network. FIG. 2 is a diagram of an architecture of a media resource system according to an embodiment of this application. The system includes a first media server in an access network or a metropolitan area network or an IT domain, a network device in a CT domain, a calling terminal, and a called terminal. The access network or the metropolitan area network includes a broadband remote access server (broadband remote access server, BRAS) and a router. The BRAS is a network device configured to complete access, authentication, accounting, control, and management of a broadband network user in various broadband access manners. The router is a device connecting various local area networks and wide area networks, and can automatically select and set a route based on a channel condition, to transmit a message in an optimal path. For other network devices, refer to the embodiment shown in FIG. 1. A terminal accesses the first media server by the BRAS and the router forwarding a resource obtaining request sent by a target application client to the first media server, to play a media resource provided in this embodiment of this application. For signaling interaction and media resource transmission between the calling terminal and a second media server, refer to the embodiment in FIG. 1.

The system architectures in FIG. 1 and FIG. 2 are system architectures shown based on different network access manners of the terminal. With popularization of a 4G network and construction of a 5G network, network bandwidths of the mobile internet and the home broadband fixed network are both of great availability, and delays are small, so that communication security and reliability can be ensured, and communication efficiency is high.

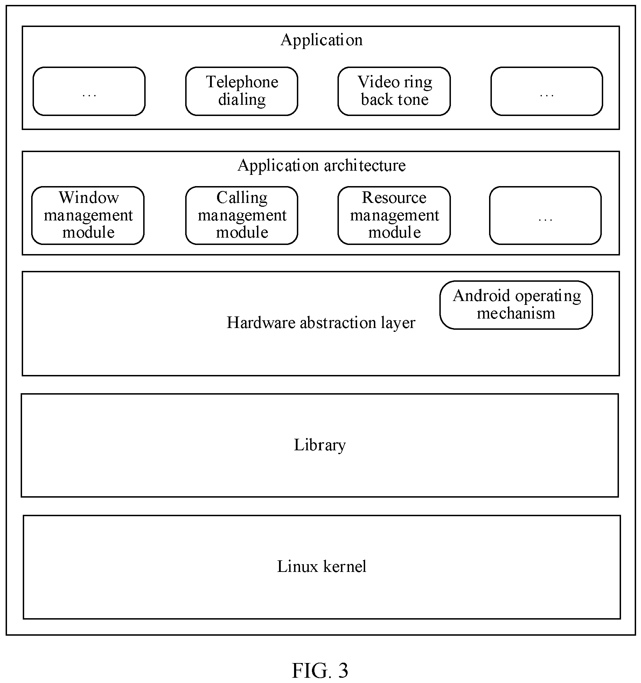

A terminal device in embodiments of this application is a device having a wireless transceiver function, and may be deployed on land, where the deployment includes indoor or outdoor, handheld, wearable, or vehicle-mounted deployment, may be deployed on the water (for example, on a ship), or may be deployed in the air (for example, on aircraft, a balloon, and a satellite). Specifically, the terminal may be a terminal device (terminal device) that can access a mobile network, a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (i.e. remote medical), a wireless terminal in a smart grid (smart grid), a wireless terminal in transportation safety (transportation safety), a wireless terminal in a smart city (smart city), a wireless terminal in a smart home (smart home), or the like. The terminal may alternatively be a terminal device that can access a fixed network, for example, a wired telephone. The terminal may alternatively be a soft terminal corresponding to application software having a call function. FIG. 3 is a diagram of a system architecture of a terminal according to an embodiment of this application. Refer to FIG. 3. The terminal may include applications (applications), an application framework (application framework), a hardware abstraction layer (hardware abstraction layer, HAL), a library (library), and a Linux kernel (Linux kernel). The applications (applications) include a telephone dialing application (dialer), a video customized ringback tone application (video RBT), and the like. The telephone dialing application provides call and dialing functions. The video customized ringback tone application is a target application, and the target application client is a video customized ringback tone application client. The application framework includes a window management module (window manager), a calling management module (telephone manager), a resource management module (resource manager), and the like. The hardware abstraction layer is an interface layer between a kernel of an operating system (Linux) and a hardware circuit, and is configured to abstract hardware. In this embodiment of this application, the hardware abstraction layer is an interface layer of the operating system. The library is for storing files of an Android system application and a third-party application. By using the library, an application can invoke some functions of another application. For example, after initiating a call, the telephone dialing application invokes the video customized ringback tone application to obtain a customized ringback tone from an IT domain. In an implementation process of this embodiment of this application, the telephone dialing application and the video customized ringback tone application cooperate with each other to implement playing of a media resource.

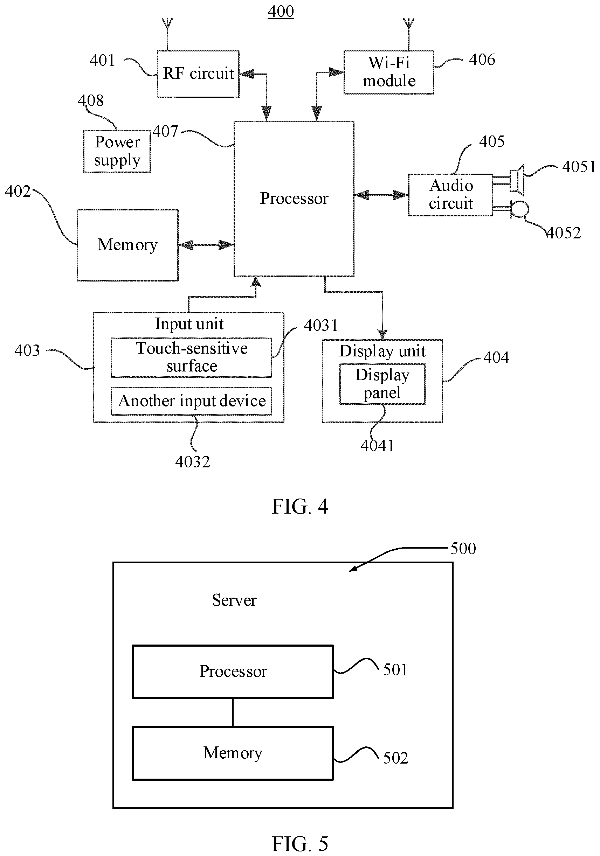

FIG. 4 is a schematic diagram of a structure of a terminal according to an embodiment of this application. The terminal may be configured to execute a media resource playing method on a calling terminal side in the following embodiments. Refer to FIG. 4. The terminal 400 includes:

The terminal 400 may include components such as a radio frequency (radio frequency, RF) circuit 401, a memory 402 including one or more computer-readable storage media, an input unit 403, a display unit 404, an audio circuit 405, a wireless fidelity (wireless fidelity, Wi-Fi) module 406, a processor 407 including one or more processing cores, and a power supply 408. A person skilled in the art may understand that a structure of the terminal shown in FIG. 4 does not constitute a limitation on the terminal, may include more or fewer components than those shown in FIG. 4, combine some components, or have different component deployments.

The RF circuit 401 may be configured to receive and send signals during an information receiving and sending process or after a call is established, particularly, after receiving downlink information of a base station, deliver the downlink information of the base station to one or more processors 407 for processing, and in addition, send related uplink data to the base station. Generally, the RF circuit 401 includes but is not limited to an antenna, at least one amplifier, a tuner, one or more oscillators, a subscriber identity module (SIM) card, a transceiver, a coupler, a low noise amplifier (low noise amplifier, LNA), a duplexer, and the like. In addition, the RF circuit 401 may further communicate with a network and another device through wireless communication. The wireless communication may use any communication standard or protocol, including but not limited to a global system for mobile communication (global system of mobile communication, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short message service, SMS), and the like. The RF circuit 401 is configured to implement a process such as a call setup process and call establishment in this embodiment of this application.

The memory 402 may be configured to store a software program and a module. The processor 407 runs the software program and the module stored in the memory 402 to execute various functional applications and data processing. The memory 402 may mainly include a program storage area and a data storage area. The program storage area may store an operating system, an application required by at least one function (such as a sound playing function and a picture playing function), and the like. The data storage area may store data (such as audio data and a phone book) created based on the use of the terminal 400, and the like. In addition, the memory 402 may include a highspeed random access memory, or may include a nonvolatile memory, such as at least one magnetic disk storage device, a flash memory device, or another volatile solid-state storage device. Correspondingly, the memory 402 may further include a memory controller, to provide access to the memory 402 for the processor 407 and the input unit 403. The memory 402 is further configured to store at least one of a first media resource and a second media resource that are obtained by the terminal in this embodiment of this application.

The input unit 403 may be configured to receive input numeral or character information, and generate keyboard, mouse, joystick, optics, or trackball signal input related to user setting and function control. Specifically, the input unit 403 may include a touch-sensitive surface 4031 and another input device 4032. The touch-sensitive surface 4031 is also referred to as a touchscreen or a touchpad, and is capable of collecting a touch operation of a user on or near the touch-sensitive surface 4031 (such as, an operation by a user on or near the touch-sensitive surface 4031 by using any appropriate object or accessory such as a finger or a stylus), and driving a corresponding connection apparatus according to a preset program. Optionally, the touch-sensitive surface 4031 may include two parts: a touch detection apparatus and a touch controller. The touch detection apparatus detects a touch location of the user, detects a signal brought by a touch operation, and delivers the signal to the touch controller. The touch controller receives touch information from the touch detection apparatus, converts the touch information into touch point coordinates, sends the touch point coordinates to the processor 407, and receives and executes a command sent by the processor 407. In addition, the touch-sensitive surface 4031 may be implemented in a plurality of types, such as, a resistive type, a capacitive type, an infrared type, and a surface acoustic wave type. In addition to the touch-sensitive surface 4031, the input unit 403 may further include the another input device 4032. Specifically, the another input device 4032 may include but be not limited to one or more of a physical keyboard, a functional key (such as a volume control or an on/off control), a trackball, a mouse, or a joystick. The input unit 403 is configured to receive a signal triggered by an operation performed by a user on the input unit 403, and transmit an exchange message to a corresponding controller based on the signal. For example, in this embodiment of this application, the user can perform a touch operation on the input unit 403 to select a media resource for playing.

The display unit 404 may be configured to display information input by the user or information provided for the user, and various graphical user interfaces of the terminal 400. These graphical user interfaces may be formed by a graph, a text, an icon, a video, or any combination thereof. The display unit 404 may include a display panel 4041. Optionally, the display panel 4041 may be configured in a form of a liquid crystal display (liquid crystal display, LCD), an organic light-emitting diode (organic light-emitting diode, OLED), or the like. Further, the touch-sensitive surface 4031 may cover the display panel 4041. After detecting a touch operation on or near the touch-sensitive surface 4031, the touch-sensitive surface 4031 transfers the touch operation to the processor 407, to determine a touch event type. Then, the processor 407 provides a corresponding visual output on the display panel 4041 based on the touch event type. For example, the display unit 404 can display at least one of a play picture of the first media resource and a play picture of the second media resource. In FIG. 4, the touch-sensitive surface 4031 and the display panel 4041 are configured as two independent components to implement input and output functions. However, in some embodiments, the touch-sensitive surface 4031 and the display panel 4041 may be integrated to implement the input and output functions.

The audio circuit 405, a speaker 4051, and a microphone 4052 may provide an audio interface between the user and the terminal 400. The audio circuit 405 may convert received audio data into an electrical signal, and then transmit the electrical signal to the speaker 4051, and the speaker 4051 converts the electrical signal into a sound signal for output. In addition, the microphone 4052 converts a collected sound signal into an electrical signal. The audio circuit 405 receives the electrical signal, converts the electrical signal into audio data, and then outputs the audio data to the processor 407 for processing. After the processing, the processor 407 sends the audio data to, for example, another terminal by using the RF circuit 401, or outputs the audio data to the memory 402 for further processing. The audio circuit 405 may further include an earplug jack, to provide communication between a peripheral earphone and the terminal 400. In this embodiment of this application, the audio circuit 405 and the speaker 4051 can implement a process related to audio playing on a terminal side. For example, when playing the first media resource, the terminal separately implements audio data processing and playing by using the audio circuit 405 and the speaker 4051.

Wi-Fi is a short distance wireless transmission technology. The terminal 400 may help, via the Wi-Fi module 406, the user to receive and send e-mails, browse a web page, access streaming media, and the like. This provides wireless broadband internet access for the user. Although the Wi-Fi module 406 is shown in FIG. 2, it may be understood that the Wi-Fi module 406 is not a mandatory component of the terminal 400, and may be omitted based on a requirement without changing the essence of the present invention.

The processor 407 is a control center of the terminal 400, connects to, through various interfaces and lines, various parts of an entire mobile phone, and executes, by running or executing a software program and/or a module stored in the memory 402 and by invoking data stored in the memory 402, various functions of the terminal 400 and data processing, to perform overall monitoring on the mobile phone. Optionally, the processor 407 may include one or more processing cores. Optionally, an application processor and a modem processor may be integrated into the processor 407. The application processor mainly processes an operating system, a user interface, an application, and the like. The modem processor mainly processes wireless communication. It may be understood that the foregoing modem processor may be not integrated into the processor 407.

The terminal 400 further includes the power supply 408 (such as a battery) supplying power to each component. Optionally, the power supply may be logically connected to the processor 407 via a power supply management system, so that functions such as charge and discharge management and power consumption management are implemented via the power supply management system. The power supply 408 may further include one or more direct current or alternating current power supplies, a rechargeable system, a power supply fault detection circuit, a power supply converter or a power supply inverter, a power supply status indicator and any other components. Although not shown, the terminal 400 may further include a camera, a Bluetooth module, and the like. Details are not described herein.

FIG. 5 is a schematic diagram of a structure of a server according to an embodiment of this application. The server 500 includes a large difference caused by different configurations or performance, and may include one or more processors 501 and one or more memories 502. The memory 502 stores at least one piece of program code, and the at least one piece of program code is loaded and executed by the processor 501 to implement a media resource playing method performed by a first media server in the following method embodiments. Certainly, the server 500 may further include components such as a wired or wireless network interface, a keyboard, and an input/output interface, to perform input/output. The server 500 may further include another component configured to implement a device function. Details are not described herein. The processor may be any processor such as a central processing unit (central processing unit, CPU), a graphics processing unit (graphics processing unit, GPU), a tensor processing unit (tensor processing unit, TPU), a neural network processing unit (neural network processing unit, NPU), a brain processing unit (brain processing unit, BPU), a deep learning processing unit (deep learning processing unit, DPU), a holographic processing unit (holographic processing unit, HPU), a vector processing unit (vector processing unit, VPU), and an intelligent processing unit (intelligence processing unit, IPU).

The processor 501 may be a general-purpose CPU, a microprocessor, an application-specific integrated circuit (application-specific integrated circuit, ASIC), a GPU, or one or more integrated circuits, and is configured to execute a related program to implement the foregoing media resource playing method.

The processor 501 may alternatively be an integrated circuit chip and has a signal processing capability. In an implementation process, steps of the media resource playing method in this application may be completed by using an integrated logic circuit of hardware in the processor 501 or program code in a form of software. Alternatively, the processor 501 may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be in a mature storage medium in the conventional technology, such as a random access memory (random access memory, RAM), a flash memory, a read-only memory (read-only memory, ROM), a programmable read-only memory, an electrically erasable programmable memory, or a register. The storage medium is in the memory 502. The processor 501 reads information in the memory 502, and completes, in combination with the hardware of the processor 501, a function that needs to be executed by a module included in a media resource playing apparatus in embodiments of this application, or performs a media resource playing method on a first media server side in the method embodiments of this application.

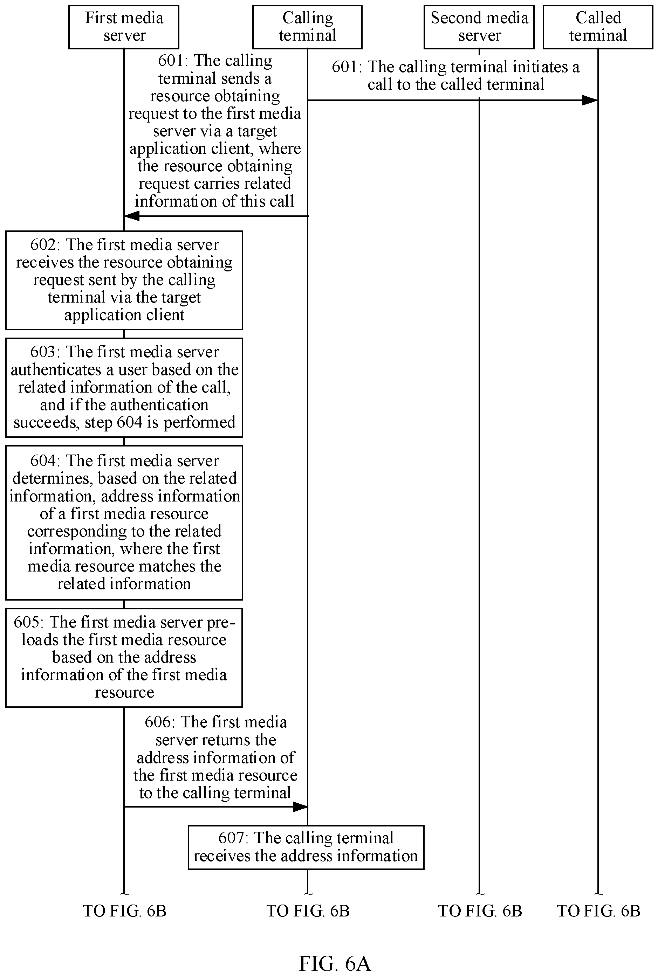

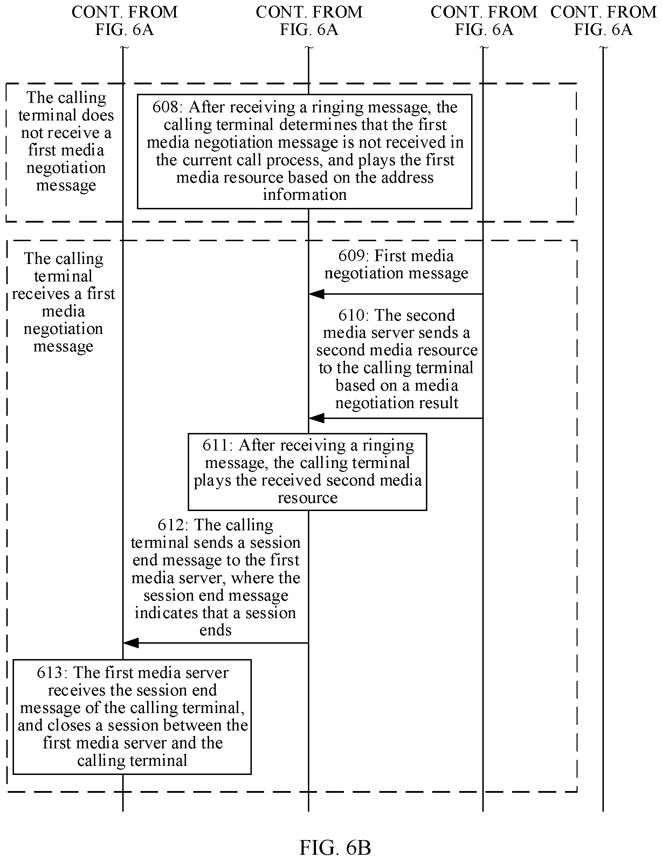

In the foregoing embodiments, a system architecture and a related structure such as hardware are described. The method in embodiments of this application is applied to the system architecture shown in FIG. 1 or FIG. 2, and certainly may alternatively be applied to another communication scenario. This is not limited in embodiments of this application. The following describes solutions of this application with reference to specific embodiments. FIG. 6A and FIG. 6B are a flowchart of a media resource playing method according to an embodiment of this application. In this procedure, if a media resource in a CT domain exists in a current call, the media resource in the CT domain is preferentially played. If no media resource in the CT domain exists in this call, a media resource from an IT domain is played as a supplement to playing. FIG. 6A and FIG. 6B include the following steps.

601: A calling terminal initiates a call to a called terminal, and the calling terminal sends a resource obtaining request to a first media server via a target application client, where the resource obtaining request carries related information of this call.

The call initiated by the calling terminal is a video call or an audio call. The target application client is an application client that has a function of playing a media resource during call establishment, for example, a video customized ringback tone application client. The target application client has a built-in media player. A first media resource is a media resource in the IT domain, for example, a media resource such as a video customized ringback tone, a video advertisement, or a video customer service. Optionally, the related information of the call includes at least one of a calling number, a called number, calling location information, a call type, and call time.

In a possible implementation, after initiating the call to the called terminal, the calling terminal starts the target application client (which may also be referred to as opening the target application client), and a telephone dialing application of the calling terminal sends the related information of the call to the target application client. After receiving the related information of the call, the target application client sends, to the first media server through the IT domain, the resource obtaining request that carries the related information. The resource obtaining request is sent by using the HTTP protocol or the HTTPS protocol.

602: The first media server receives the resource obtaining request sent by the calling terminal via the target application client.

In a possible implementation, after receiving the resource obtaining request sent by the calling terminal via the target application client, the first media server reads the related information of the call from a corresponding field of the resource obtaining request.

603: The first media server authenticates a user based on the related information of the call, and if the authentication succeeds, step 604 is performed.

In this embodiment of this application, the authentication includes authentication on user function information (which is also referred to as validity authentication). Optionally, the authentication further includes authentication on user identity information. The authentication on the user function information is to authenticate whether the user subscribes to a media resource. The authentication on the user identity information is to authenticate a user identity, for example, authenticate a called mobile phone number, to determine whether the mobile phone number is a valid mobile phone number. Optionally, authenticating the user is authenticating a calling user and/or a called user.

In a possible implementation, for example, a calling number is authenticated. A corresponding authentication process includes: After obtaining the related information carried in the resource obtaining request, the first media server determines, based on a calling number in the related information, whether the calling number is a valid number. If the calling number is a valid number, the first media server performs query in a subscription database. If it is queried that a media resource service has been enabled for the calling number, the user authentication succeeds, and subsequent step 604 is performed. If the calling number is not found, the user authentication fails. A process of authenticating a called user is similar to the preceding process.

Optionally, the target application client further supports setting of a side from which a media resource is to be played during the call establishment. To be specific, setting information further indicates whether the calling terminal plays a media resource subscribed to by a calling side or a called side. If a calling user wants to play a media resource subscribed to by the calling user during the call establishment, the calling user may perform setting on the target application client, and the target application client sends, to the first media server, setting information set by the calling user. In this way, the first media server stores the setting information, so that the corresponding media resource is sent to the calling terminal based on the setting information during the call establishment.

Optionally, the first media server further records the related information of the call, which may be used as a data reference for subsequent operation.

In the foregoing process, the user is authenticated to verify legality and/or validity of the user, so as to ensure subsequent secure playing of a media resource, so that security and reliability of playing a media resource in the IT domain are improved.

It should be noted that, after the first media server authenticates the user successfully, the first media server establishes a session connection with the calling terminal, where the session connection is based on the HTTP protocol or the HTTPS protocol, so that in a subsequent process, related information of a media resource or the like is exchanged with the calling terminal by using the session connection.

604: The first media server determines, based on the related information, address information of the first media resource corresponding to the related information, where the first media resource matches the related information.

The address information is a uniform resource locator (uniform resource locator, URL) address of the first media resource, and the URL address is also referred to as a web page address. That the first media resource matches the related information means that the first media resource is a user number in the related information, for example, a calling number or a called number, or a subscribed media resource. Alternatively, that the first media resource matches the related information means that the first media resource is a media resource corresponding to user information or scenario information in the related information. This is not limited in this embodiment of this application.

In a possible implementation, an example in which a subscription database is used to store a relationship between a number and an identifier of a subscribed resource, and a media resource database is used to store a media resource is used for description. The foregoing process of determining the address information includes: The first media server queries the subscription database based on the calling number, to determine a resource identifier of a media resource corresponding to the calling number, in other words, determine the first media resource preset by the user, and then further queries the media resource database based on the resource identifier, to obtain the address information of the first media resource. The foregoing process varies with a storage form of a database. For example, if the subscription database stores a relationship between a number and address information of a subscribed media resource, the foregoing process of determining the address information includes: The first media server queries the subscription database based on the calling number in the related information, and determines the address information of the media resource corresponding to the calling number. For another database storage form, the address determining process may be changed based on the database storage form. It can be understood that the foregoing process is described by using an address determining process that is based on the calling number as an example, and an address determining process that is based on the called number is similar to the foregoing process. Details are not described herein again.

In a possible implementation, if a user subscribes to the media resource service but does not specify a specific media resource, the first media server can determine the personalized first media resource for the user. For example, the first media server determines the first media resource based on scenario information such as a network to which the calling terminal belongs, a current real-time location of the calling user, and time in the related information. For another example, the first media server obtains an attribute label of the calling user based on calling user information of the calling terminal in the related information, for example, an age, a gender, a user credit rating, an internet access habit, and a consumption behavior of the calling user, to determine, based on the attribute label of the calling user, the first media resource corresponding to the attribute label. The media resource is determined for the calling terminal based on some attributes or real-time type information of the user, so that a more personalized and diversified media resource service can be provided.

605: The first media server pre-loads the first media resource based on the address information of the first media resource.

Optionally, a method in which the first media server pre-loads the first media resource includes any one of the following:

In a possible implementation, the first media resource is stored in a hard disk of the first media server. After determining the address information of the first media resource, the first media server pre-loads related content of the first media resource from the hard disk of the first media server to a memory or a cache.

In another possible implementation, the first media resource is stored in a hard disk or a memory of a server other than the first media server. After determining the address information of the first media resource, the first media server pre-loads related content of the first media resource from the hard disk or the memory of the server other than the first media server to a memory or a cache of the first media server.

In still another possible implementation, the first media resource is stored in a database. After determining the address information of the first media resource, the first media server pre-loads related content of the first media resource from the database to a memory or a cache of the first media server.

The database may be a database associated with the first media server, or may be a database associated with another server. The user information database is not limited in this embodiment of this application.

It can be understood that the foregoing three implementations correspond to different pre-loading processes based on different storage locations of the first media resource. If the first media server loads the resource when the calling terminal device obtains the first media resource, a delay is caused. However, according to the foregoing pre-loading method, a delay problem of subsequent media resource playing can be optimized, and efficiency of obtaining the first media resource is improved. In other words, a problem of long play waiting time during subsequent media resource playing is not caused.

606: The first media server returns the address information of the first media resource to the calling terminal.

It should be noted that, in the foregoing step 601 to step 606, a type of a media transmission flow between the calling terminal and the first media server is an HTML flow. In this scenario, the resource obtaining request sent by the calling terminal to the first media server is an HTTP message or an HTTPS message, and the address information returned by the first media server to the calling terminal is an HTTP response or an HTTPS response.

It should be noted that, in the foregoing embodiment, step 605 is an optional step. In another optional implementation, the first media server performs step 606 after step 604, and does not perform the resource pre-loading step. In addition, in the foregoing embodiment, step 605 and step 606 are performed in a current sequence. In another optional implementation, step 606 may be performed before step 605, or the two steps are performed simultaneously. This is not limited in this embodiment of this application.

607: The calling terminal receives the address information.

In this embodiment of this application, after receiving the address information, the calling terminal temporarily does not obtain the first media resource, but waits for a ringing message in the CT domain, and after determining that no media resource in the CT domain exists during the current call establishment, the target application client obtains the first media resource based on the address information, to avoid a waste of network resources.

It should be noted that for the calling terminal, in a possible implementation, after receiving the address information, the calling terminal may obtain the first media resource based on the address information by using the target application client. In this way, the resource can be quickly played after the ringing message is received, and a delay problem of subsequent media resource playing can be optimized.

For the calling terminal, a corresponding processing procedure is executed corresponding to whether a media resource in the CT domain exists during the current call establishment. For example, as shown in step A, after the ringing message is received, it is determined that no media resource in the CT domain exists during the current call establishment, and the first media resource is played, to provide corresponding audiovisual experience. However, step B is a procedure of playing the second media resource when the calling terminal determines that the media resource of the CT domain exists in the current call in a scenario of receiving a first media negotiation message.

A: After receiving the ringing message of the called terminal, the calling terminal determines that the first media negotiation message is not received during the current call establishment, and plays the first media resource.

608: After receiving the ringing message of the called terminal, the calling terminal determines that the first media negotiation message is not received during the current call establishment, and plays the first media resource based on the address information.

The ringing message is a 180 ringing message that is based on a SIP protocol, and the ringing message indicates that the called terminal has rung.

The first media negotiation message is used for media negotiation between a second media server and the calling terminal, where the second media server is in the CT domain. Optionally, the first media negotiation message carries audio and video capability information of the second media server, in other words, the first media negotiation message is a SIP message that carries SDP information of the second media server. Specifically, a header field of the first media negotiation message carries early media information, for example, P-Early-Media: SDP, and/or SDP information of the first media negotiation message carries an a=contengt:g3gpp.cat media attribute, to indicate that the first media negotiation message is used for early media media negotiation between the second media server and the calling terminal.

The foregoing step 608 is an optional implementation in which the calling terminal plays the first media resource in the IT domain when the calling terminal determines that during the current call establishment, no to-be-played media resource, for example, early media resource, in the CT domain existsduring the current call establishment. Optionally, after receiving the ringing message, the calling terminal determines that the calling terminal does not perform early media media negotiation with the second media server during the current call establishment, and in this case, the calling terminal determines that no to-be-played early media resource in the CT domain exists during the current call establishment. For example, as shown in step 608, when the calling terminal determines that the first media negotiation message is not received, after receiving the ringing message, the calling terminal determines that the calling terminal does not perform early media media negotiation with the second media server during the current call establishment.

Based on the foregoing example, after receiving the ringing message of the called terminal, the calling terminal determines that the calling terminal does not receive the first media negotiation message, and can determine that the calling terminal does not perform media negotiation with the second server. Therefore, the calling terminal determines that no early media resource in the CT domain is to be played during the current call establishment, in other words, the early media resource in the CT domain is not played in the current call.

Optionally, after receiving the ringing message of the called terminal, the calling terminal determines whether a to-be-played early media resource in the CT domain exists during the current call establishment. If no to-be-played early media resource in the CT domain exists during the current call establishment, playing is performed based on the first media resource. If the to-be-played early media resource in the CT domain exists during the current call establishment, playing is performed based on the second media resource. For details, refer to steps 609 to 613.

Optionally, the determining whether the to-be-played early media resource in the CT domain exists during the current call establishment is implemented depending on whether media negotiation is performed on the early media, in other words, it is determined whether the calling terminal and the second media server perform early media media resource negotiation during the call establishment. If early media media resource negotiation is not performed during the call establishment, playing is performed based on the first media resource. If early media media resource negotiation is performed during the call establishment, playing is performed based on the second media resource. For details, refer to steps 609 to 613.

Optionally, the determining whether early media media resource negotiation is performed during the call establishment is implemented depending on whether the first media negotiation message is received, in other words, it is determined whether the calling terminal receives the first media negotiation message during the current call establishment. If the first media negotiation message is not received during the current call establishment, playing is performed based on the first media resource. If the first media negotiation message is received during the current call establishment, playing is performed based on the second media resource. For details, refer to steps 609 to 613.

It should be noted that the foregoing process of determining whether the first media negotiation message is received is performed by a telephone dialing application of the calling terminal.

In a possible implementation, if the telephone dialing application of the calling terminal determines that the first media negotiation message is not received, the telephone dialing application sends the address information of the first media resource to the target application client, and the target application client sends the resource obtaining request to the first media server based on the address information. The first media server determines, in response to the resource obtaining request, the first media resource corresponding to the address information from the pre-loaded media resource, and sends the first media resource to the calling terminal. After obtaining the first media resource, the calling terminal plays the first media resource via the target application client.

It should be noted that the determined first media resource may be one or more first media resources. If the first media resource is a plurality of resources, resource switching may be performed based on an operation performed by the user on a calling terminal side.

Further, the calling terminal shields a third media resource, where the third media resource indicates that the called terminal has rung. For example, the third media resource is beep tones during the call establishment. The third media resource is either a locally stored media resource or a media resource sent by a telephony application server (TAS), and the telephony application server is a server in the CT domain. It can be understood that, that the calling terminal shields a third media resource means not to play a locally stored media resource or not to play, after receiving a media resource sent by the TAS, the media resource. It can be understood that when no media resource in the CT domain is played, beep tones are usually used during the call establishment to indicate that the called terminal has rung. Therefore, in this case, the third media resource is shielded to suppress the beep tones playing in the call, so that only audio of the first media resource is played during the call establishment. Therefore, auditory confusion caused by simultaneously playing two audio segments is avoided, and user experience is improved.

B: After receiving the ringing message, the calling terminal determines that the first media negotiation message is received during the current call establishment, and does not play the first media resource.

609: The calling terminal receives the first media negotiation message.

The following describes the foregoing media negotiation process by using an example process. The second media server sends the first media negotiation message to the calling terminal, where the first media negotiation message carries media capability information of the second media server. For example, the first media negotiation message is an update or 18* message. After receiving the first media negotiation message, the calling terminal determines a media negotiation result based on a capability of the calling terminal, and sends a second media negotiation message to the second media server, where the second media negotiation message carries the media negotiation result, and may also be referred to as media capability information of the calling terminal. For example, the second media negotiation message is a 200OK message.

610: The second media server sends the second media resource to the calling terminal based on the media negotiation result.

For example, the second media server sends a media stream of the second media resource to the calling terminal in a form of an RTP flow. In this process, the calling terminal does not actively obtain the second media resource, but the second media server pushes the media stream. The second media resource is a media resource in the CT domain.

611: After receiving the ringing message, the calling terminal plays the received second media resource.

The calling terminal plays the media stream of the second media server after receiving the media stream of the second media server.

Optionally, after the ringing message is received, it is determined whether the first media resource is to be played, and if the first media resource is not to be played, the resource is released by using the following steps 612 and 613. It should be noted that the determining process may be performed after the first media negotiation message is received or at another occasion. In addition, if the calling terminal plays the first media resource, steps 612 and 613 are performed after the playing is completed or the playing is ended.

612: The calling terminal sends a session end message to the first media server, where the session end message indicates that a session ends.

In this process, the calling terminal does not play the media resource in the IT domain, and the calling terminal sends the session end message to the first media server via the target application client.

613: The first media server receives the session end message of the calling terminal, and closes a session between the first media server and the calling terminal.

In a possible implementation, after receiving the session end message of the calling terminal, the first media server releases the session between the first media server and the calling terminal, in other words, releases a resource such as a bandwidth channel occupied by the session. Occupation of a resource such as a bandwidth channel can be avoided through a session release process.

Further, after receiving the session end message of the calling terminal, the first media server releases the first media resource pre-loaded by the first media server, to prevent the first media resource from occupying a memory of the first media server.

It should be noted that, in this embodiment of this application, an example in which steps 612 and 613 are performed after step 611 is used for description. It can be understood that steps 611 and 612 may be performed in another time sequence, for example, performed when the first media negotiation message is received in step 609, or performed when the second media resource is received, or may be performed when the second media resource starts to be played. This is not limited in this embodiment of this application.

In addition, if step 608 is performed in this embodiment of this application, and playing of the first media resource ends, steps 612 and 613 may also be performed to release the media resource. The first media server is actively notified that the session ends, so that the first media server can release the first media resource in a timely manner, to avoid occupying the memory of the first media server.

In the foregoing implementation, a media resource in the IT domain can be used as a supplement to a media resource in the CT domain. When no media resource in the CT domain is played, the terminal plays the media resource in the IT domain by using the target application client. Therefore, a user who does not subscribe to the media resource in the CT domain can also play a media resource in a process of waiting for a call to be connected. However, if it is determined, based on the foregoing steps, that the first media negotiation message is received, it may be determined that the media resource in the CT domain exists during the current call establishment, and the calling terminal plays the media resource in the CT domain rather than the media resource in the IT domain, so that a play conflict is avoided, and communication and audiovisual experience of a user is improved.

In the technical solution provided in this application, a media resource may be obtained and played through interaction between the target application client and the first media server, and a call procedure in the CT domain is not affected. In this way, a problem such as a call connection failure that may be caused in an interaction process is avoided, a media resource playing procedure is simplified, and communication efficiency is improved. A video customized ringback tone application is built in a terminal, so that a video customized ringback tone service is implemented through an IT service during call establishment in the CT domain. The video customized ringback tone service can be expanded more flexibly when an IT network resource is not a bottleneck and a network delay is smaller.

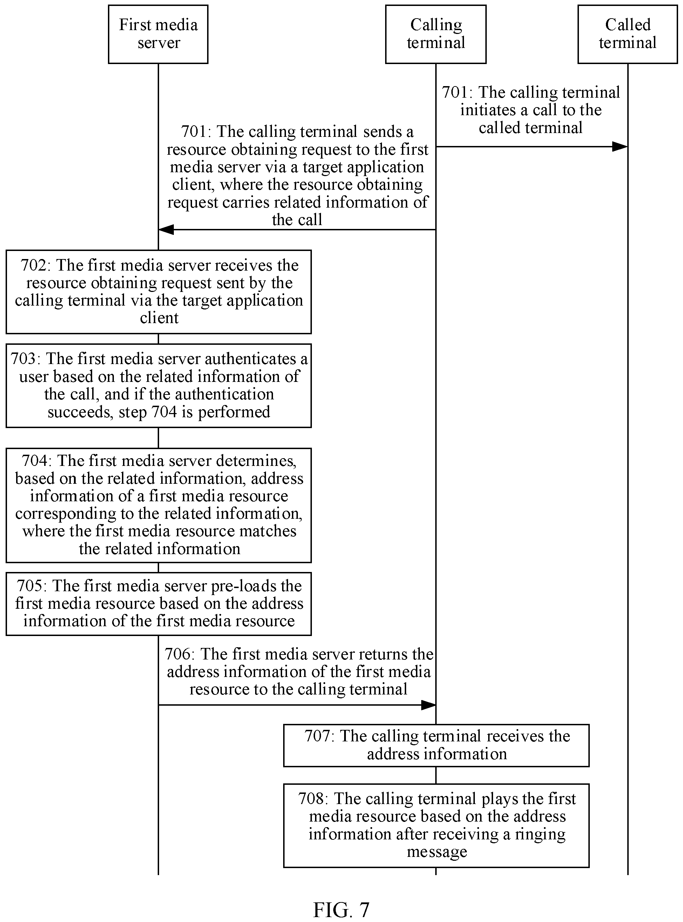

The embodiment shown in FIG. 6A and FIG. 6B is described by using an example in which the media resource in the CT domain is preferentially played. The calling user may further set a domain from which a media resource is to be played, so that the calling terminal can play the media resource in the specified domain based on the setting information. If the setting information indicates to play a media resource from the IT domain during call establishment, the calling terminal obtains and plays the first media resource regardless of whether a media resource in the CT domain exists in the current call. The following describes the media resource playing method with reference to a process shown in FIG. 7. Refer to FIG. 7. The process includes the following steps.

701: A calling terminal initiates a call to a called terminal, and the calling terminal sends a resource obtaining request to a first media server via a target application client, where the resource obtaining request carries related information of this call.

702: The first media server receives the resource obtaining request sent by the calling terminal via the target application client.

703: The first media server authenticates a user based on the related information of the call, and if the authentication succeeds, step 704 is performed.

704: The first media server determines, based on the related information, address information of a first media resource corresponding to the related information, where the first media resource matches the related information.

705: The first media server pre-loads the first media resource based on the address information of the first media resource.

706: The first media server returns the address information of the first media resource to the calling terminal.

707: The calling terminal receives the address information.

For step 701 to step 707, refer to step 601 to step 607 in the embodiment shown in FIG. 6A and FIG. 6B.

708: The calling terminal plays the first media resource based on the address information after receiving a ringing message.

For a process of playing the first media resource, refer to specific descriptions of the play process in step 608. Details are not described herein again.

In this embodiment of this application, the calling terminal stores setting information indicating a domain from which a media resource is to be played. The setting information is set by a calling user or is default information. This is not limited in this embodiment of this application. For example, the user actively sets the setting information. The user sets the setting information on the target application client, to select a source of a media resource to be played by the user during call establishment, so as to generate the setting information, and store the setting information in the calling terminal. Optionally, the calling terminal stores the setting information in the first media server, so that after starting the target application client, the calling terminal can obtain the stored setting information from the first media server and play the media resource based on an indication of the setting information.

It should be noted that the calling terminal may read the stored setting information at any one of the following occasions. For example, the calling terminal performs reading when initiating a call. For another example, the calling terminal performs reading when receiving the address information. For another example, the calling terminal performs reading when receiving the ringing message. An occasion at which the calling terminal reads the setting information may not be affected by the CT domain. For another example, the calling terminal performs reading after receiving the first media negotiation message, in other words, the calling terminal performs reading when it is determined that a media resource in the CT domain exists in the call.

In the foregoing embodiment, a calling user may perform setting on the calling terminal, to play a media resource in the IT domain during call establishment, so that the media resource in the IT domain is played during calling based on a personalized setting of the user.

Further, if the setting information of the calling terminal indicates that the first media resource is to be played during the current call establishment, and the calling terminal receives the first media negotiation message and receives a second media resource of a second media server, the calling terminal shields the second media resource of the second media server, where the second media server is a server in the CT domain. For the first media negotiation message, refer to descriptions in the foregoing embodiment, and details are not described herein again. In the foregoing implementation, the shielding the second media resource of the second media server means that the calling terminal does not play the second media resource after receiving the second media resource sent by the second media server.

In the foregoing embodiment, the second media resource of the second media server is shielded during call establishment, to suppress playing a media resource in the CT domain. Further, the target application client plays a media resource in the IT domain, to ensure that only the first media resource is played during the call establishment, and avoid interference that may be caused by simultaneously playing a plurality of media resources.

In another possible implementation, when initiating the call to the called terminal, the calling terminal obtains the setting information. If the calling terminal determines, based on the setting information, to play only a media resource in the IT domain, a generated calling request (INVITE) does not carry a video identifier of a contact header field, where the video identifier of the contact header field indicates that media playing in the CT domain is supported. In this way, the video identifier of the contact header field is not carried when the call is initiated, so that media negotiation in the CT domain is avoided. In addition, the second media server does not send the second media resource to the calling terminal, so that a network resource is saved.

In the technical solution provided in this application, a media resource may be obtained and played through interaction between the target application client and the first media server, and a call procedure of the CT domain is not affected. In this way, a problem such as a call connection failure that may be caused in an interaction process is avoided, a media resource playing procedure is simplified, and communication efficiency is improved. Further, a function of setting a playing source is provided, so that a personalization degree of media playing can further be improved, and user experience is improved.

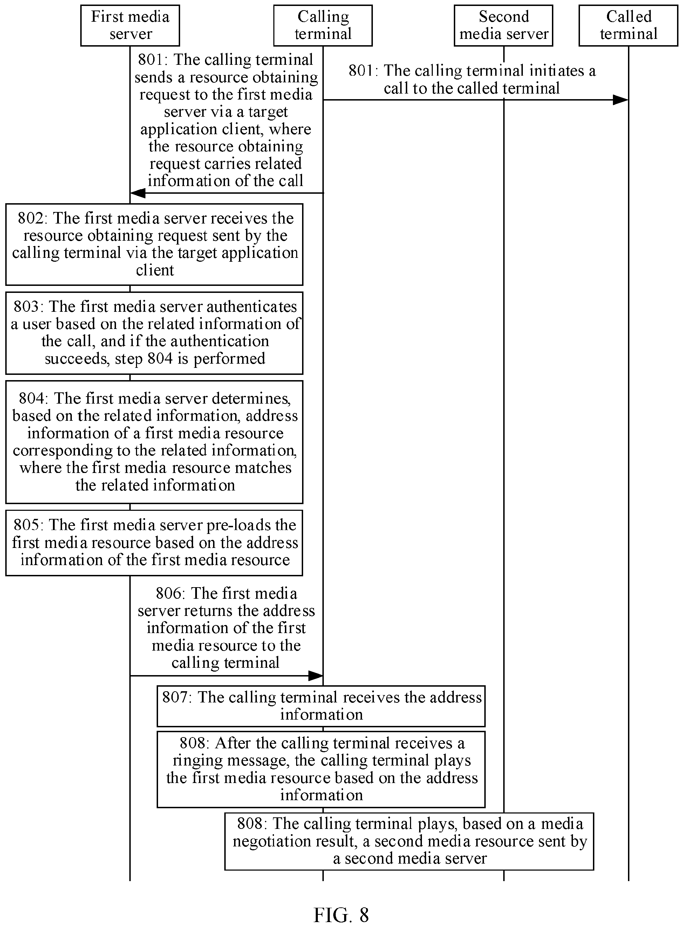

The foregoing embodiments are all described by using an example in which the calling terminal plays a media resource in a domain. For the calling terminal, a more flexible playing manner can be provided. To be specific, the calling terminal may simultaneously play media resources from different domains. The following describes a media resource playing method with reference to FIG. 8. Refer to FIG. 8. The process includes the following steps.

801: A calling terminal initiates a call to a called terminal, and the calling terminal sends a resource obtaining request to a first media server via a target application client, where the resource obtaining request carries related information of this call.

802: The first media server receives the resource obtaining request sent by the calling terminal via the target application client.

803: The first media server authenticates a user based on the related information of the call, and if the authentication succeeds, step 804 is performed.

804: The first media server determines, based on the related information, address information of a first media resource corresponding to the related information, where the first media resource matches the related information.

805: The first media server pre-loads the first media resource based on the address information of the first media resource.

806: The first media server returns the address information of the first media resource to the calling terminal.

807: The calling terminal receives the address information.

For step 801 to step 807, refer to step 601 to step 607 in the embodiment shown in FIG. 6A and FIG. 6B.

808: After the calling terminal receives a ringing message, the calling terminal plays the first media resource based on the address information, and plays, based on a media negotiation result, a second media resource sent by a second media server.

In the foregoing process, the calling terminal and the second media server first perform media negotiation, and then the second media server sends a media stream to the calling terminal based on the media negotiation result. For a media negotiation process, refer to content descriptions of step 609 in the foregoing embodiment.

It should be noted that the first media resource and the second media resource may be played simultaneously, or may be played asynchronously. This is not limited in this embodiment of this application. In a possible implementation, if the first media resource is downloaded before the second media resource is obtained, the first media resource is played when the second media resource starts to be played, so that playing of the two media can be kept synchronous. In another possible implementation, when any media resource is obtained, playing of the media resource is started, and after another media resource is obtained, playing of the another media resource is directly started, to ensure audiovisual experience of a user.

In the foregoing process, when there is a media resource in the IT domain and a media resource in the CT domain in the current call, both the media resources in the CT domain and the media resources in the IT domain are played. This brings new experience and higher selectivity to a user, and improves experience and a participation degree of the user in a video customized ringback tone service.

Optionally, playing of the first media resource and playing of the second media resource are implemented by the calling terminal based on setting information. For example, if the setting information of the calling terminal indicates to simultaneously play the media resource in the IT domain and the media resource in the CT domain, step 808 is performed. In this manner, new experience and higher selectivity are brought to a user, and experience and a participation degree of the user in a video customized ringback tone service are improved.

Optionally, when playing the first media resource and the second media resource, the calling terminal may use the following play mode: The first media resource is played in a full-screen mode, and the second media resource is played in a floating window mode and a silent mode. Alternatively, the second media resource is played in a full-screen mode, and the first media resource is played in a floating window mode and a silent mode.

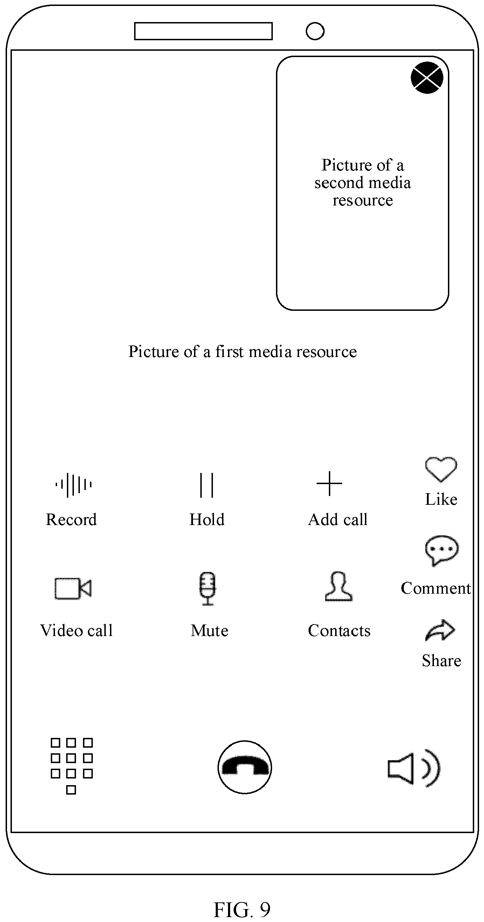

For example, FIG. 9 is a schematic diagram of playing of a media resource according to an embodiment of this application. Refer to FIG. 9. In FIG. 9, a solution is described by using an example in which a first media resource is played in full screen and a second media resource is played in a floating window. In the foregoing two implementations, one media resource is played in the full-screen mode, and the other media resource is played in the floating window mode, so that the two media resources can be clearly and intuitively displayed. In addition, one media resource is normally played (with sound) in a full screen, and the other media resource is silently played in a floating window, so that poor user experience caused by simultaneously playing two audio segments is avoided.

Optionally, in a scenario in which one of the two media resources is played in the floating window mode and the other is played in the full-screen mode, a process in which the calling terminal performs corresponding processing based on a click operation on the floating window includes any one of the following:
In a possible implementation, if the calling terminal detects a click operation on the floating window, the calling terminal switches a media resource played on the floating window to play the media resource in the full-screen mode, and closes another media resource. In this process, in a process of watching a media resource, a calling user may perform a click operation on a floating window corresponding to a media resource that the calling user is interested in, play the media resource in a full screen, and close another media resource, so that the media resource that the calling user wants to watch can be reserved, to bring better watching experience to the calling user.

In another possible implementation, if the calling terminal detects a click operation on the floating window, the calling terminal switches a media resource played on the floating window to play the media resource in the full-screen mode, and switches another media resource to play the media resource in the floating window mode. In this process, after a calling user performs a click operation on a floating window corresponding to a media resource that the calling user is interested in, the calling terminal plays the media resource in a full screen, and switches another media resource to play the media resource in a floating window, so that the user may further continue to switch to the another media resource for watching.

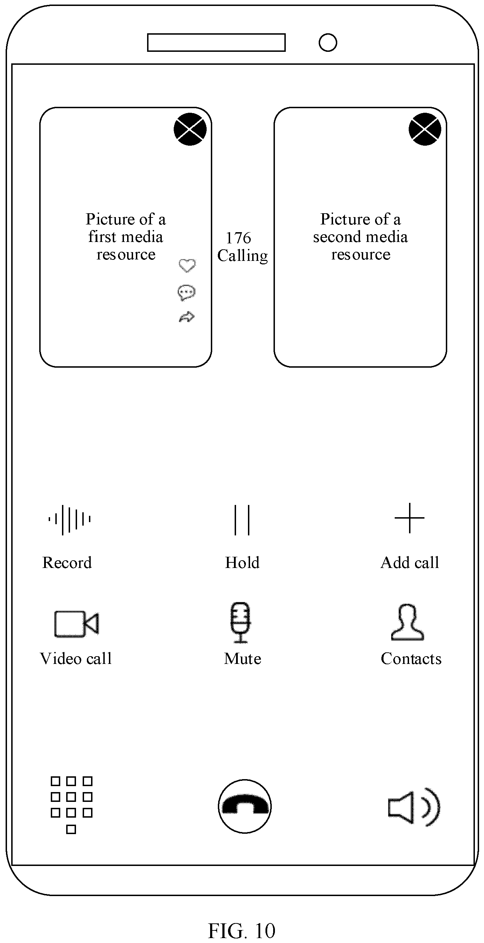

In another possible implementation, both the first media resource and the second media resource are played in a floating window mode, and at least one of the first media resource and the second media resource is in a silent mode. For example, FIG. 10 is a schematic diagram of playing of a media resource according to an embodiment of this application. Refer to FIG. 10. The first media resource and the second media resource are separately played in different floating windows. In this implementation, the two media resources are separately played in a floating window, and the two media resources can also be clearly and intuitively displayed. In addition, because at least one of the media resources is silently played, auditory confusion caused by simultaneously playing two audio segments is also avoided, and user experience is improved. Optionally, playing of the first media resource is implemented by using a player of a target application client (a video customized ringback tone application), and playing of the second media resource is implemented by using a player of a system application (a telephone dialing application).

Optionally, in a scenario in which the two media resources are both played in the floating window mode, a process in which the calling terminal performs corresponding processing based on a click operation on the floating window includes any one of the following:
In a possible implementation, if the two media resources are both played in the floating window mode, and the calling terminal detects a click operation on any floating window, the calling terminal switches a media resource played on the floating window to play the media resource in the full-screen mode, and closes the other media resource. In this process, in a process of watching a media resource, a calling user may perform a click operation on a floating window corresponding to a media resource that the calling user is interested in, play the media resource in a full screen, and close another media resource, so that the media resource that the calling user wants to watch can be reserved, to bring better watching experience to the calling user.

In another possible implementation, if the calling terminal detects a click operation on the floating window, the calling terminal switches a media resource played on the floating window to play the media resource in the full-screen mode, and retains the floating window mode of the other media resource. In this process, after a calling user performs a click operation on a floating window corresponding to a media resource that the calling user is interested in, the calling terminal plays the media resource in a full screen, and switches another media resource to play the media resource in a floating window, so that the user reserves an entry for switching back to the another media resource for playing, to provide richer operation experience.

It can be understood that, in the foregoing two implementations, the click operation on the floating window is a click operation on any position in the floating window except a close key. As shown in FIG. 9 or FIG. 10, a close key is disposed on each floating window. By clicking the close key, a user may pause a media resource that does not want to continue to be played, to achieve an objective of personalized selection and playing. In other words, if the calling terminal detects a click operation on the close key on the floating window, the calling terminal closes the floating window.

In the technical solution provided in this application, by using interaction between the target application client and the first media server, when a media resource in the CT domain is played, the media resource in the CT domain and a media resource in the IT domain can be simultaneously played. This brings new experience and higher selectivity to a user, and improves experience and a participation degree of the user in a video customized ringback tone service.

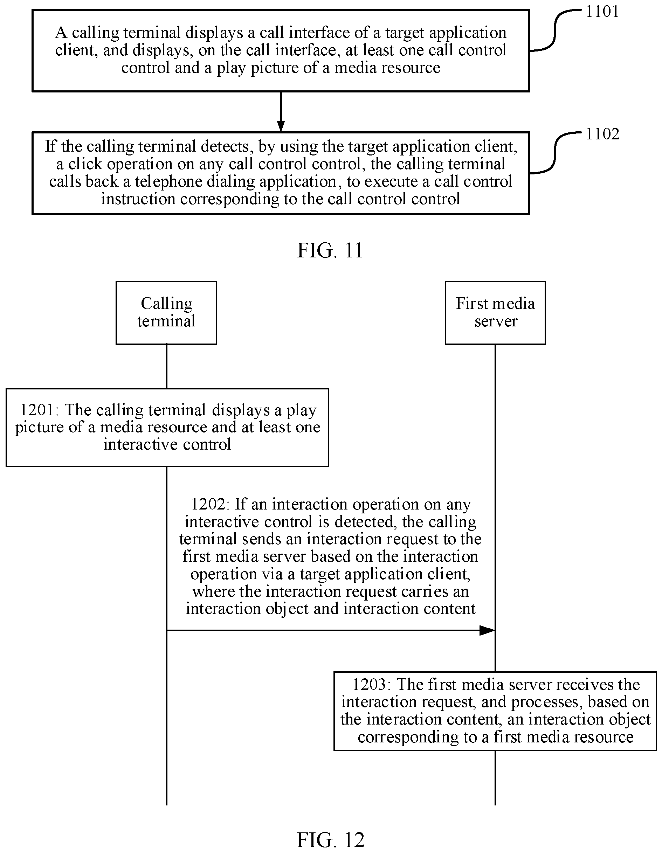

FIG. 6A and FIG. 6B, FIG. 7, and FIG. 8 describe how to play a media resource based on a scenario in which a media resource exists/does not exist in the CT domain. In addition, in the process of playing the first media resource and/or the second media resource, the call establishment may be further controlled. FIG. 11 is a flowchart of a call control method that is based on media resource playing according to an embodiment of this application. Refer to FIG. 11.

1101: A calling terminal displays a call interface of a target application client, and displays, on the call interface, at least one call control control and a play picture of a media resource.

In a possible implementation, the call control control is generated based on configuration data of the target application client, that is, a control provided by the target application client. For example, as shown in FIG. 9 or FIG. 10, the call control control includes a call stop control, a hands-free control, a recording control, and the like.

It should be noted that a display effect shown in FIG. 9 or FIG. 10 is that the play picture of the media resource is displayed on the call interface, and the call interface includes a plurality of call control controls. It should be noted that the entire call interface is a display interface of the target application client. The target application client generates a layer of the call interface based on the configuration data, displays the layer on an upper layer of a terminal interface, and then displays the play picture of the media resource on the layer of the call interface in an overlay manner, to provide visual experience of playing on the call interface for a user.

1102: If the calling terminal detects, by using the target application client, a click operation on any call control control, the calling terminal calls back a telephone dialing application, to execute a call control instruction corresponding to the call control control.

It should be noted that, to simulate the call interface and ensure that call control can be normally performed during the call establishment, the target application client may transfer, after detecting an operation on any call control control, an instruction corresponding to the operation to the telephone dialing application, so that the telephone dialing application performs corresponding processing on the current call, for example, waiting or recording.

Optionally, the calling terminal displays at least one media control control when displaying the play picture of the media resource. The media control control is a control for controlling playing of the first media resource, so that a user controls a play progress of the first media resource, for example, pause, fast forward, or the like. The media control control is generated based on the configuration data of the target application client, that is, a control provided by the target application client. For example, if the calling terminal detects a click operation on any media control control, the calling terminal performs play control on the played media resource based on a function of the media control control.

FIG. 6A and FIG. 6B, FIG. 7, and FIG. 8 describe how to play a media resource based on a scenario in which a media resource exists/does not exist in the CT domain. In addition, in a process of playing the first media resource and/or the second media resource, an interaction function that is based on a media resource may be further provided. FIG. 12 is a flowchart of an interaction method that is based on media resource playing according to an embodiment of this application. Refer to FIG. 12.

1201: A calling terminal displays at least one interactive control on a play picture of a media resource.

The interactive control is for providing a like control (as shown in FIG. 9 and FIG. 10), a comment control, a sharing control, and the like. The interactive control is generated based on control data sent by a first media server or based on local configuration data of a target application client.

1202: If an interaction operation on any interactive control is detected, the calling terminal sends an interaction request to the first media server based on the interaction operation via the target application client, where the interaction request carries an interaction object and interaction content.

The interaction object is interaction data corresponding to the interactive control, and the interaction content is updated content of the interaction object. For example, the interaction object is like data, and the interaction content is the like data plus one. The interaction request further carries a resource identifier of a first media resource, so that the first media server processes, based on the resource identifier, interaction content corresponding to the first media resource.

1203: The first media server receives the interaction request, and processes, based on the interaction content, an interaction object corresponding to the first media resource.

After receiving the interaction request, the first media server determines, based on the resource identifier carried in the interaction request, the interaction object corresponding to the first media resource, and then processes the interaction object based on the interaction content carried in the interaction request. For example, if the interaction object carried in the interaction request is like data, and the interaction content is a quantity of likes plus 1, the first media server increases stored like data of the first media resource by 1, and increases like data displayed on the calling terminal by 1.

It should be noted that, in the procedure in FIG. 12, a type of a media transmission flow used between the calling terminal and the first media server is an HTML flow. The calling terminal sends an HTTP message or an HTTPS message to the first media server, and then the first media server returns an HTTP response or an HTTPS response to the calling terminal.

In the technical solution provided in this embodiment of this application, when a media resource is played during the call establishment, media control and interaction in a customized ringback tone scenario are implemented by providing function controls such as the call control control, the media control control, and the interactive control, so that interest of a video customized ringback tone service is improved. In addition, by providing the interactive control, interest of playing the media resource can be greatly improved, interaction flexibility is higher, and interaction content is richer.

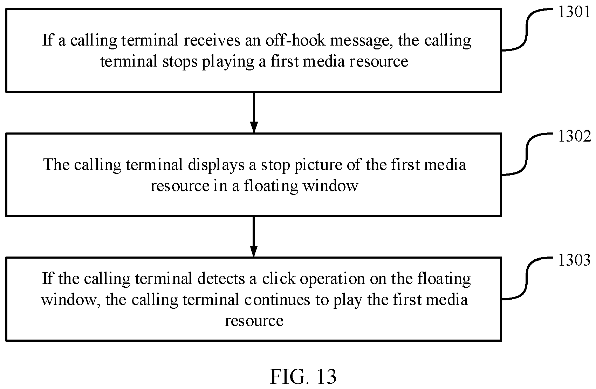

In the foregoing embodiment, the call control, the media control, and the interaction function that are based on the first media resource are described. In the play process, a process such as playing and pausing based on a call is further involved. The following describes a solution based on processing of the playing and the pausing. FIG. 13 describes the solution by using an example in which a first media resource is played.

1301: If a calling terminal receives an off-hook message, the calling terminal stops playing a first media resource.

The off-hook message indicates that a called terminal is off hook, and a calling user and a called user start a call.

In a possible implementation, if the calling terminal receives the off-hook message, and notifies, by using a telephone dialing application, a target application client to stop playing the first media resource, the target application client controls a player to stop playing.

1302: The calling terminal displays a stop picture of the first media resource in a floating window.

The stop picture is a preset picture (for example, an entry picture of the target application client) or a play picture corresponding to a moment at which playing stops. In step 1302, the calling user performs setting on the calling terminal, to implement a function of retaining picture display of the first media resource after the call is established. In other words, it is determined, based on setting information of the calling terminal, to retain a display state of the media resource after the call is established. In the foregoing embodiment, the picture display may still be retained after the call is established, to provide an entry for a further operation for the user and improve flexibility of media playing.

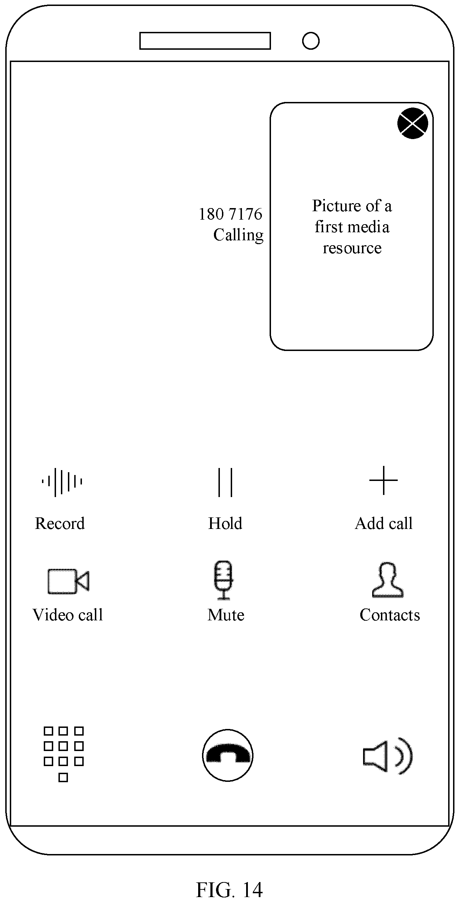

For example, FIG. 14 is a schematic diagram of playing of a media resource according to an embodiment of this application. Refer to FIG. 14. When a display state of a first media resource is retained after the call is established, the first media resource is displayed on a call interface in a form of a floating window.

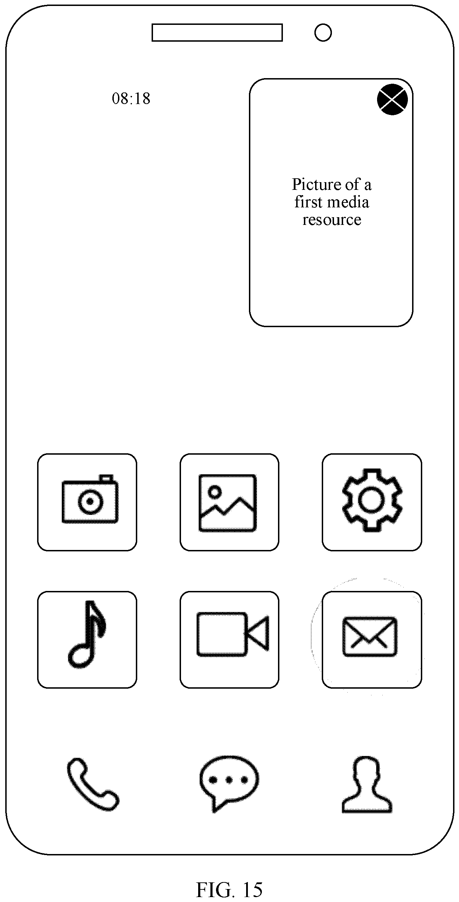

Optionally, a calling terminal further supports setting of the display status after a call ends. A corresponding process is as follows:
In a possible implementation, if it is determined, based on setting information of the calling terminal, to retain the display state of the first media resource after the call ends, when the call ends, a stop picture of the first media resource is displayed on a main interface of the calling terminal in a form of a floating window. FIG. 15 is a schematic diagram of playing of a media resource according to an embodiment of this application. Refer to FIG. 15. After a call ends, a first media resource is displayed on a main interface of a calling terminal in a form of a floating window.

In another possible implementation, if it is determined, based on setting information of the calling terminal, that the display state of the first media resource is not retained after the call ends, a session end message is sent to the first media server when the call ends. After receiving the session end message, the first media server releases a current call session and the pre-loaded first media resource. For a release process, refer to descriptions in the foregoing embodiment. Details are not described herein again.

1303: If the calling terminal detects a click operation on the floating window, the calling terminal continues to play the first media resource.

In the foregoing embodiment, if a calling user wants to continue to watch the first media resource, the calling user may click the floating window to continue to play the first media resource. The operation is convenient and simple. In addition, because the first media resource is a media resource in the IT domain, the target application client supports the first media resource in continuing to be played based on a play picture at a pause moment, so that the user can continue to watch a previous segment. This brings better watching experience to the user.

In a possible implementation, the stop picture is used as a portal website entrance of the target application client. If a click operation on the floating window is detected, a portal website interface is displayed in the opened target application client, that is, the target application client is started, and the portal website interface corresponding to the target application client is displayed in the target application client. In the foregoing embodiment, if a calling user wants to access a portal website, the calling user may click the floating window to access the portal website. The operation is convenient and simple. Optionally, if the calling user wants to watch another media resource, the calling user browses the another media resource on the portal website interface, and performs a click operation on the media resource that the calling user wants to watch, the calling terminal starts to play the media resource corresponding to the click operation. If the calling user wants to perform related service setting on the target application client, a corresponding setting control is clicked on the portal website interface, so that a corresponding function can also be implemented.

Optionally, the calling terminal plays the first media resource in different manners based on click operations on the floating window at different moments. A corresponding process is as follows:
In a possible implementation, if the calling terminal detects a click operation on the floating window after the call is established, the calling terminal silently plays the first media resource. In another possible implementation, if the calling terminal detects a click operation on the floating window after talking ends, the calling terminal cancels a silent mode of the first media resource, and normally plays the first media resource.

In the foregoing process, a calling user may click the floating window at any moment after the call is established or after the talking ends, to continue to watch the first media resource. The calling terminal can perform playing in different manners depending on whether a moment corresponding to clicking of the calling user is after the call is established or after the talking ends. The first media resource is silently played after the call is established, so that the calling use can clearly hear talking content, and important talking content after the call is established is not missed. After the talking ends, the first media resource may be normally played, in other words, played in a non-silent manner.

In another possible implementation, the calling terminal further supports rolling (switching) playing of a media resource. To be specific, if a media switching instruction is received, a media resource next to the first media resource is played. In the foregoing process, a plurality of media resources may be played during call establishment, and switching playing of the media resources may be flexibly implemented based on the media switching instruction, so that interest of a video customized ringback tone service is improved.

In a possible implementation, the calling terminal closes the floating window if detecting a closing operation on the floating window or screen-off. In another possible implementation, if detecting screen-off, the calling terminal stops playing the first media resource. If detecting that a screen is on, the calling terminal continues to play the first media resource based on play content corresponding to a screen-off moment. In another possible implementation, after the first media resource is stopped being played, a session end message is sent to the first media server. For this process, refer to the foregoing steps 612 and 613.

It can be understood that FIG. 13 shows an implementation process in which display of the floating window is retained after off-hook in a scenario of playing the first media resource. For a scenario of playing the second media resource and a scenario of simultaneously playing the first media resource and the second media resource, the foregoing process of step 1301 to step 1303 is still applicable, and details are not described herein again.

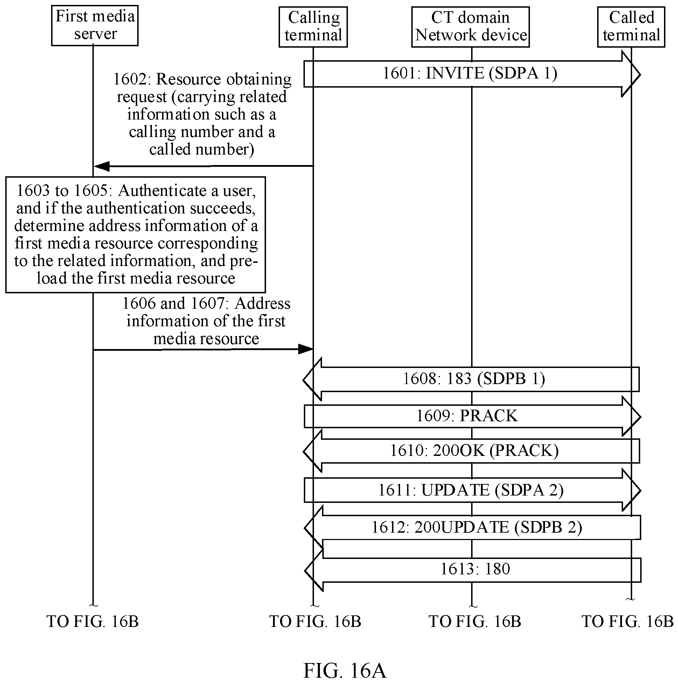

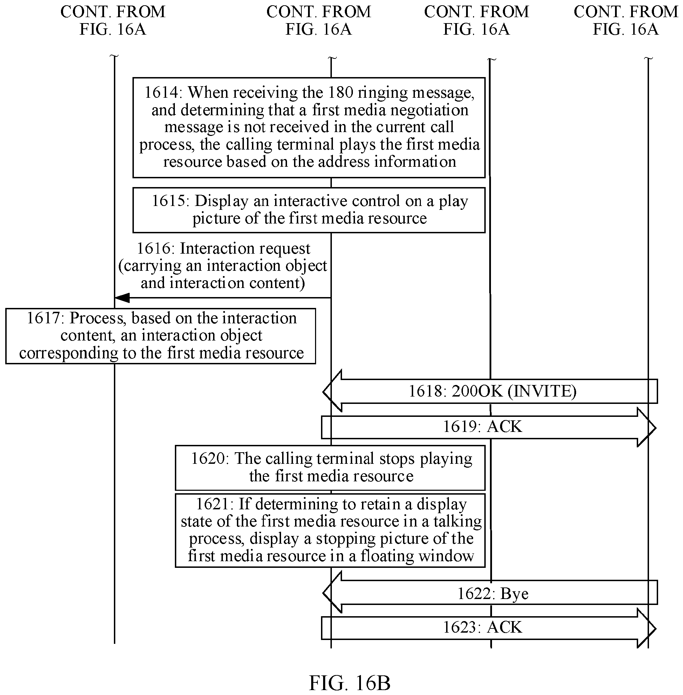

With reference to signaling interaction in a VoLTE network, the following describes how to implement playing in a ringing phase by using an IT media resource in a scenario in which no early media resource in a CT domain exists in this call in the embodiment shown in FIG. 6A and FIG. 6B. FIG. 16A and FIG. 16B are a flowchart of a media resource playing method according to an embodiment of this application.

1601: A calling terminal sends an INVITE message, where the INVITE message carries SDP information (for example, SDPA 1 information) of the calling terminal.

1602: The calling terminal detects that the calling terminal initiates a call, and sends a resource obtaining request to a first media server via a target application client, where the resource obtaining request carries related information of this call.

1603: The first media server authenticates a user based on the related information of the call, and if the authentication succeeds, step 1604 is performed.

It should be noted that during authentication, the first media server performs authentication based on a calling number and the like in the related information. A specific authentication method is as described in the foregoing embodiment, and details are not described herein again.

1604: The first media server determines, based on the related information of the call, address information of a first media resource corresponding to the related information, where the first media resource matches the related information.

1605: The first media server pre-loads the first media resource based on the address information of the first media resource.

1606: The first media server returns the address information of the first media resource to the calling terminal.

1607: The calling terminal receives the address information.

1608: A called terminal receives the INVITE message, and sends a 183 message for a call request, where the 183 message carries SDP information (for example, SDPB 1 information) of the called terminal.

1609: The calling terminal receives the 183 message, and sends a PRACK message to the called terminal, where the PRACK message indicates that the calling terminal has received the 183 message sent by the called terminal.

1610: The called terminal receives the PRACK message, and sends 200OK (PRACK) to the calling terminal, where the 200OK (PRACK) indicates that the called terminal has received the PRACK message sent by the calling terminal.

1611: The calling terminal receives the 200OK (PRACK) and sends an UPDATE message to the called terminal. SDPA 2 information carried in the UPDATE message indicates that the calling UE successfully reserves a resource for the call.

1612: The called terminal receives the UPDATE message, and sends a 200UPDATE message to the calling terminal, where SDPB 2 information carried in the 200UPDATE message indicates that the called terminal successfully reserves a resource for the call.

The calling terminal and the called terminal successfully reserve the resources for the call until step 1612.

1613: The called terminal rings and sends a 180 ringing message to the calling terminal.

It should be noted that, in step 1601 to step 1613, the solution is described by using an example in which both a calling side and a called side are VoLTE networks. If the called side is another network, a signaling interaction process does not affect implementation of the solution of this application. In addition, a signaling interaction process in steps 1608 to 1613 does not need to wait for a message returned by the first media server. In other words, a process in steps 1602 to 1607 and a process in steps 1608 to 1613 do not affect each other. In this embodiment of this application, a video customized ringback tone that is based on an IT service does not affect a telecommunication network for feature development related to a media form, and can be brought online in a lightweight manner, to avoid a risk of affecting telecommunication call establishment.

It should be further noted that the INVITE message, the 183 message, the PRACK message, the 200OK (PRACK) message, the UPDATE message, and the 200UPDATE message are all transparently transmitted to the calling terminal or the called terminal via a network device, to trigger the calling terminal or the called terminal to perform a further process.

1614: When receiving the 180 ringing message, and determining that a first media negotiation message is not received during the current call establishment, the calling terminal plays the first media resource based on the address information.

After receiving the 180 ringing message, the calling terminal determines whether the first media negotiation message is received. If the first media negotiation message is not received, the calling terminal performs playing based on the first media resource. If the first media negotiation message is received, the calling terminal performs playing based on a second media resource in the CT domain.

For example, the first media negotiation message is an UPDATE message. The UPDATE message carries media capability information of the second media server, for example, SDP CAT 1, and the SDP information is used for media resource negotiation between the calling terminal and the second media server.

1615: The calling terminal displays at least one interactive control on a play picture of the first media resource.

1616: If an interaction operation on any interactive control is detected, the calling terminal sends an interaction request to the first media server based on the interaction operation via the target application client, where the interaction request carries an interaction object and interaction content.

1617: The first media server receives the interaction request, and processes, based on the interaction content, an interaction object corresponding to the first media resource.

1618: The called terminal sends a 200OK (INVITE) message to the calling terminal, where the 200OK (INVITE) message indicates that the called terminal is off hook.

1619: The calling terminal receives the 200OK (INVITE) message, and sends an ACK message to the called terminal, where the ACK message indicates that the calling terminal has received the 200OK (INVITE) message sent by the called terminal.

1620: The calling terminal stops playing the first media resource.

The calling terminal and the called terminal start a call until step 1620.

1621: If the calling terminal determines to retain a display state of the first media resource after the call is established, the calling terminal displays a stop picture of the first media resource in a floating window.

It should be noted that step 1621 is an optional solution. In another possible implementation, if it is determined, based on setting information of the calling terminal, not to retain the display state of the first media resource after the call is established, playing of the first media resource is closed. Further, optionally, the calling terminal sends a session end message to the first media server, where the session end message indicates that a session ends.

1622: The called terminal sends a Bye message to the calling terminal, where the Bye message indicates that the called terminal is on hook.

1623: The calling terminal receives the Bye message, and sends an ACK message to the called terminal, where the ACK message indicates that the calling terminal has received the Bye message sent by the called terminal.

The call between the calling terminal and the called terminal is ended until step 1623.

Optionally, after the call ends, if the calling terminal detects a click operation on the floating window, the calling terminal continues to play the first media resource. Optionally, the calling terminal displays a portal website interface in the opened target application client.

In the technical solution provided in this application, a media resource may be obtained and played through interaction between the target application client and the first media server, and a call procedure of the CT domain is not affected. In this way, a problem such as a call connection failure caused by incomplete message processing in an interaction process is avoided, a media resource playing procedure is simplified, and communication efficiency is improved. In addition, for a user who does not subscribe to a media resource service in the CT domain, a media resource can also be played in a call procedure. A video customized ringback tone application is built in a terminal, and a video customized ringback tone service is implemented through an IT service during call establishment in the CT domain. With the development and application of 5G, the video customized ringback tone service can be expanded more flexibly when an IT network resource is not a bottleneck and a network delay is smaller.

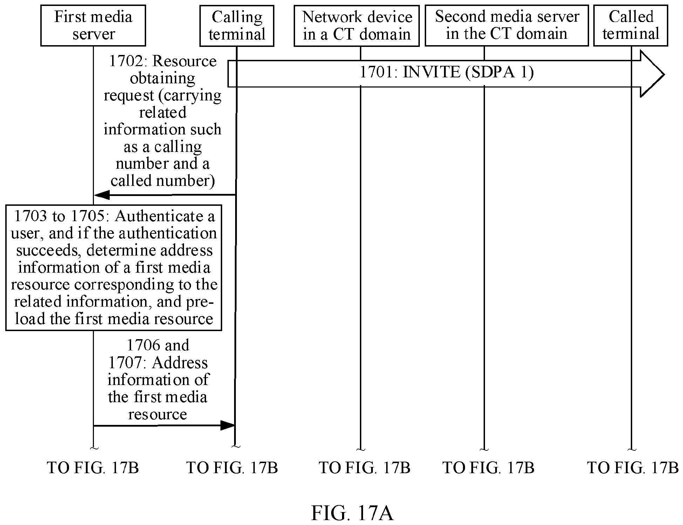

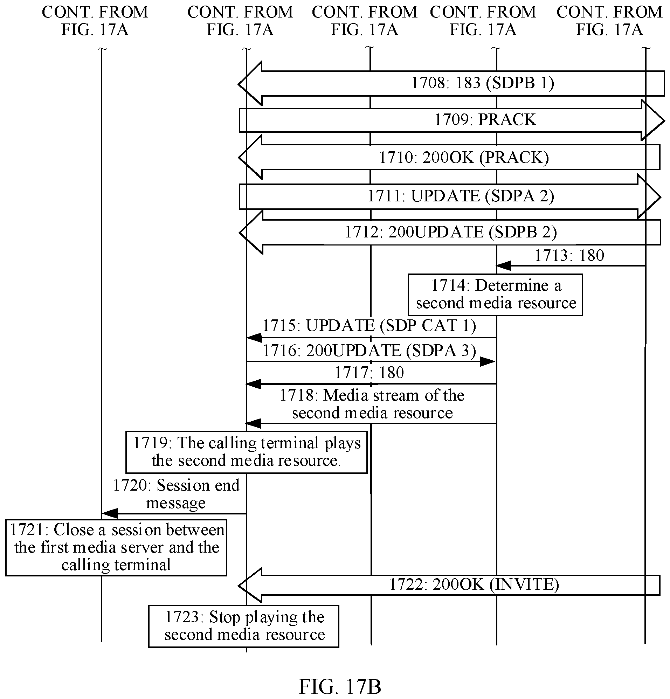

FIG. 16A and FIG. 16B show a process in which playing in the ringing phase is implemented by using the IT media resource when no media resource in the CT domain exists in this call. With reference to signaling interaction in a VoLTE network, the following describes a process of selecting to play a CT media resource by default to implement playing in a ringing phase when the media resource in the CT domain and a media resource in the IT domain both exists in a current call. FIG. 17A and FIG. 17B are a flowchart of a media resource playing method according to an embodiment of this application. Refer to FIG. 17A and FIG. 17B.

1701: A calling terminal sends an INVITE message, where the INVITE message carries SDP information (for example, SDPA 1 information) of the calling terminal.

1702: The calling terminal detects that the calling terminal initiates a call, and sends a resource obtaining request to a first media server via a target application client, where the resource obtaining request carries related information of this call.

1703: The first media server authenticates a user based on the related information of the call, and if the authentication succeeds, step 1704 is performed.

1704: The first media server determines, based on the related information of the call, address information of a first media resource corresponding to the related information, where the first media resource matches the related information.

1705: The first media server pre-loads the first media resource based on the address information of the first media resource.

1706: The first media server returns the address information of the first media resource to the calling terminal.

1707: The calling terminal receives the address information.

1708: A called terminal receives the INVITE message, and sends a 183 message for a call request, where the 183 message carries SDP information (for example, SDPB 1 information) of the called terminal.

1709: The calling terminal receives the 183 message, and sends a PRACK message to the called terminal, where the PRACK message indicates that the calling terminal has received the 183 message sent by the called terminal.

1710: The called terminal receives the PRACK message, and sends 200OK (PRACK) to the calling terminal, where the 200OK (PRACK) indicates that the called terminal has received the PRACK message sent by the calling terminal.

1711: The calling terminal receives the 200OK (PRACK), and sends an UPDATE message to the called terminal, where SDPA 2 carried in the UPDATE message indicates that the calling terminal successfully reserves a resource for the call.

1712: The called terminal receives the UPDATE message, and sends a 200UPDATE message to the calling terminal, where SDPB 2 information carried in the 200UPDATE message indicates that the called terminal successfully reserves a resource for the call.

The calling terminal and the called terminal successfully reserve the resources for the call until step 1712.

1713: The called terminal starts ringing, and sends a 180 ringing message to a second media server, where the 180 ringing message carries the related information of the call.

1714: The second media server receives the 180 ringing message, and determines, based on the related information of the call, a second media resource corresponding to the related information.

For example, a customized ringback tone subscribed by a called number is determined based on the called number.

1715: The second media server sends an UPDATE message to the calling terminal, where the UPDATE message carries media capability information of the second media server, for example, SDP CAT 1, and the SDP information is used for media resource negotiation between the calling terminal and the second media server.

It can be understood that the UPDATE message is the first media negotiation message in the foregoing embodiment.

1716: The calling terminal receives the UPDATE message, and returns a 200OK (UPDATE) message to the second media server, where the 200OK (UPDATE) message carries media capability information of the calling terminal, to be specific, a media negotiation result (for example, SDPA 3 information) between the calling terminal and the second media server.

It can be understood that the 200OK (UPDATE) message is the second media negotiation message in the foregoing embodiment.

1717: The second media server sends the 180 ringing message to the calling terminal.

1718: The second media server sends a media stream of the second media resource to the calling terminal.

1719: The calling terminal receives and plays the second media resource.

1720: The calling terminal sends a session end message to the first media server, where the session end message indicates that a session ends.

1721: The first media server receives the session end message of the calling terminal, and closes a session between the first media server and the calling terminal.

Steps 1720 and 1721 are optional solutions. If the calling terminal determines that a to-be-played early media resource exists in the CT domain during the current call establishment, the calling terminal does not play the first media resource, and performs steps 1720 and 1721. Specifically, after receiving the 180 ringing message, the calling terminal determines that the UPDATE message, that is, the first media negotiation message, used for negotiating the media resource in the CT domain is received, and then plays the media resource (namely, the second media resource) in the CT domain, but does not play the first media resource.

Further, the calling terminal performs step 1720 to end the session with the first media server. An execution occasion of step 1720 is not limited, and step 1720 may be executed after it is determined not to play the first media resource, for example, executed after 1717.

1722: After a called user is off hook,the called terminal sends a 200OK (INVITE) message to the calling terminal, where the 200OK (INVITE) message indicates that the called terminal is off hook.

1723: The calling terminal receives the 200OK (INVITE) message, and stops playing the second media resource.

In the technical solution provided in this application, if it is determined that the first media negotiation message is received, it may be determined that a media resource in the CT domain exists during the current call establishment. The calling terminal plays the media resource in the CT domain instead of a media resource in an IT domain, so that the media resource in the CT domain is normally played during the call establishment without being affected by another media resource. Therefore, a play conflict is avoided, and communication and audiovisual experience of a user is improved. In addition, the first media server can release the first media resource, to avoid occupying a memory of the first media server.

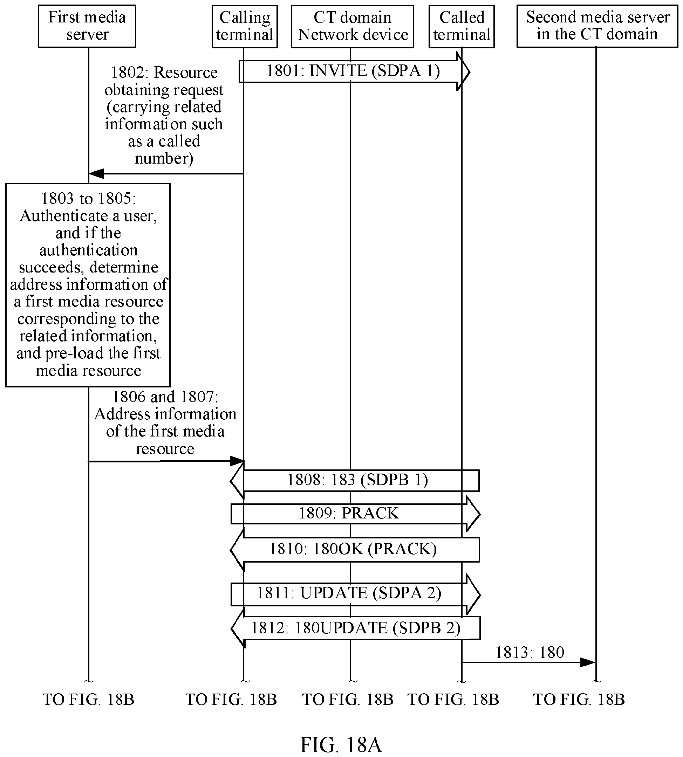

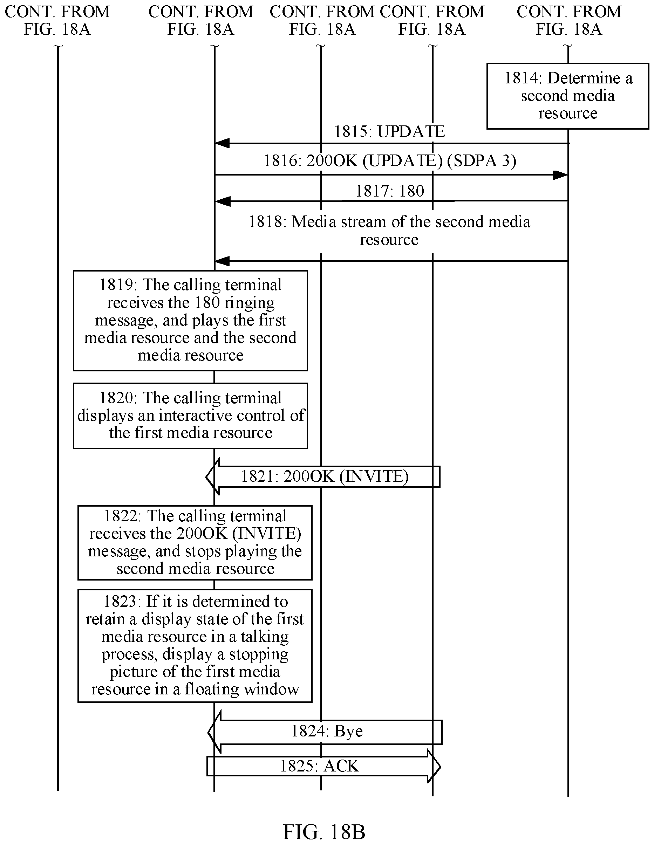

With reference to signaling interaction in a VoLTE network, the following describes a process of implement playing in a ringing phase by playing both a CT media resource and an IT media resource when the media resource in the CT domain and the media resource in the IT domain both exist in the current call. FIG. 18A and FIG. 18B are a flowchart of a media resource playing method according to an embodiment of this application.

1801: A calling terminal sends an INVITE message, where the INVITE message carries SDP information (for example, SDPA 1 information) of the calling terminal.

1802: The calling terminal detects that the calling terminal initiates a call, and sends a resource obtaining request to a first media server via a target application client, where the resource obtaining request carries related information of this call.

1803: The first media server authenticates a user based on the related information of the call, and if the authentication succeeds, step 1804 is performed.

1804: The first media server determines, based on the related information of the call, address information of a first media resource corresponding to the related information, where the first media resource matches the related information.

1805: The first media server pre-loads the first media resource based on the address information of the first media resource.

1806: The first media server returns the address information of the first media resource to the calling terminal.

1807: The calling terminal receives the address information.

1808: A called terminal receives the INVITE message, and sends a 183 message for a call request, where the 183 message carries SDP information (for example, SDPB 1 information) of the called terminal.

1809: The calling terminal receives the 183 message, and sends a PRACK message to the called terminal, where the PRACK message indicates that the calling terminal has received the 183 message sent by the called terminal.

1810: The called terminal receives the PRACK message, and sends 200OK (PRACK) to the calling terminal, where the 200OK (PRACK) indicates that the called terminal has received the PRACK message sent by the calling terminal.

1811: The calling terminal receives the 200OK (PRACK), and sends an UPDATE message to the called terminal, where SDPA 2 carried in the UPDATE message indicates that the calling terminal successfully reserves a resource for the call.

1812: The called terminal receives the UPDATE message, and sends a 200UPDATE message to the calling terminal, where SDPB 2 information carried in the 200UPDATE message indicates that the called terminal successfully reserves a resource for the call.

The calling terminal and the called terminal successfully reserve the resources for the call until step 1812.

1813: The called terminal starts ringing, and sends a 180 ringing message to a second media server, where the 180 ringing message carries the related information of the call.

1814: The second media server receives the 180 ringing message, and determines, based on the related information of the call, a second media resource corresponding to the related information.

1815: The second media server sends an UPDATE message to the calling terminal, where the UPDATE message carries media capability information of the second media server, for example, SDP CAT 1 that is used for media resource negotiation between the calling terminal and the second media server.

1816: The calling terminal receives the UPDATE message, and returns a 200OK (UPDATE) message to the second media server, where the 200OK (UPDATE) message carries media capability information of the calling terminal, to be specific, a media negotiation result (for example, SDPA 3 information) between the calling terminal and the second media server.

The calling terminal and the called terminal successfully reserve the second media resource until step 1816.

1817: The second media server sends the 180 ringing message to the calling terminal.

1818: The second media server sends a media stream of the second media resource to the calling terminal.

1819: The calling terminal receives the 180 ringing message, plays the first media resource based on the address information, and plays the second media resource based on the received media stream of the second media resource.

1820: The calling terminal displays an interactive control of the first media resource.

Step 1820 is an optional solution. Based on the interactive control, a calling terminal user may implement an interaction operation about the first media resource, to implement interaction, for example, commenting or like.

1821: After a called user is off hook,the called terminal sends a 200OK (INVITE) message to the calling terminal, where the 200OK (INVITE) message indicates that the called terminal is off hook.

1822: The calling terminal receives the 200OK (INVITE) message, and stops playing the second media resource.

1823: If it is determined, based on setting information of the calling terminal, to retain a display state of the first media resource after the call is established, the calling terminal displays a stop picture of the first media resource in a floating window.

Step 1823 is an optional solution.

In another possible implementation, if it is determined, based on setting information of the calling terminal, not to retain the display state of the first media resource after the call is established, playing of the first media resource is closed. Further, optionally, the calling terminal sends a session end message to the first media server, where the session end message indicates that a session ends.

1824: The called terminal sends a Bye message to the calling terminal, where the Bye message indicates that the called terminal is on hook.

1825: The calling terminal receives the Bye message, and sends an ACK message to the called terminal, where the ACK message indicates that the calling terminal has received the Bye message sent by the called terminal.

The call between the calling terminal and the called terminal is ended until step 1825.

Optionally, after the call ends, if the calling terminal detects a click operation on the floating window, the calling terminal continues to play the first media resource. Optionally, the calling terminal displays a portal website interface in the opened target application client.

In the technical solution provided in this application, by using interaction between the target application client and the first media server, when a media resource in the CT domain is played, the media resource in the CT domain and a media resource in the IT domain can be simultaneously played. This brings new experience and higher selectivity to a user, and improves experience and a participation degree of the user in a video customized ringback tone service.

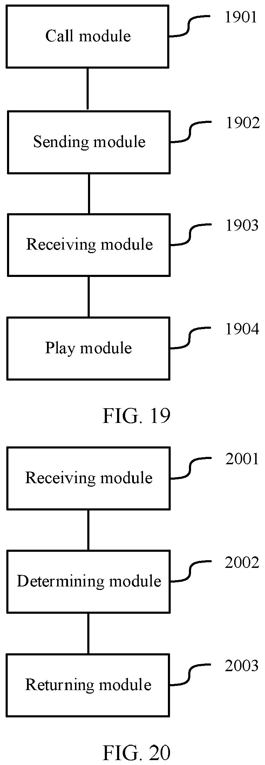

FIG. 19 is a schematic diagram of a structure of a media resource playing apparatus according to an embodiment of this application. The apparatus is configured to perform the methods performed by the calling terminal in the foregoing embodiments. Refer to FIG. 19. The media resource playing apparatus includes a calling module 1901, a sending module 1902, a receiving module 1903, and a playing module 1904.

The calling module 1901 is configured to initiate a call to a called terminal.

The sending module 1902 is configured to send a resource obtaining request to a first media server via a target application client, where the resource obtaining request carries related information of the call.

The receiving module 1903 is configured to receive address information of a first media resource returned by the first media server based on the resource obtaining request, where the first media resource matches the related information.

The playing module 1904 is configured to play the first media resource based on the address information after receiving a ringing message.

In a possible implementation, the first media server is a server in an internet technology IT domain.

In a possible implementation, the first media server performs communication by using either a mobile internet or a home broadband fixed network.

In a possible implementation, the playing module 1904 is further configured to perform step 608.

In a possible implementation, the playing module 1904 is further configured to perform step 708.

In a possible implementation, the apparatus further includes a shielding module, configured to perform the process of shielding the second media resource in step 708.

In a possible implementation, the playing module 1904 is further configured to perform step 808.

In a possible implementation, the playing module 1904 is further configured to perform the process of playing the first media resource and the second media resource based on the setting information in step 808.

In a possible implementation, the first media resource is played in a full-screen mode, and the second media resource is played in a floating window mode and a silent mode; the second media resource is played in a full-screen mode, and the first media resource is played in a floating window mode and a silent mode; or both the first media resource and the second media resource are played in a floating window mode, and at least one of the first media resource and the second media resource is in a silent mode.

In a possible implementation, the apparatus further includes a switching module, configured to perform the process of switching a playing mode of the media resource from the floating window mode to the full-screen mode and closing the another media resource in step 808.

In a possible implementation, the shielding module is further configured to perform the process of shielding the third media resource in step 608.

In a possible implementation, the third media resource is either a locally stored media resource or a media resource sent by the telephony application server, and the telephony application server is a server in the CT domain.

In a possible implementation, the apparatus further includes:
a display module, configured to perform the display process of the interactive control in any one of step 1201, step 1615, and step 1820.

The sending module 1902 is further configured to perform the sending process of the interaction request in step 1202 or step 1616.

In a possible implementation, at least one function control is any one of at least one original function control of the target application client or at least one function control sent by the first media server.

In a possible implementation, the apparatus further includes:

The playing module 1904 is further configured to perform the process of stopping playing based on the off-hook message in step 1301 or step 1620.

The display module is further configured to perform the process of displaying the stop picture in the floating window in step 1302, step 1621, or step 1823.

In a possible implementation, the apparatus further includes any one of the following:
The playing module 1904 is further configured to perform the process of continuing playing the first media resource in step 1303; or
the display module is further configured to perform the process of displaying the portal website interface in step 1303.

In a possible implementation, the playing module 1904 includes any one of the following:
a silent playing sub-module, configured to perform the process of silently playing the first media resource after the call is established in step 1303; or
a normal playing sub-module, configured to perform the process of normally playing the first media resource after the call ends in step 1303.

In a possible implementation, the apparatus further includes a closing module, configured to perform the process of closing the floating window in step 1303.

In a possible implementation, the playing module 1904 is further configured to perform the playing switching process in step 1303.

It should be noted that, when the media resource playing apparatus provided in the foregoing embodiment plays a media resource, division into the foregoing functional modules is merely used as an example for illustration. In actual application, the foregoing functions may be allocated to different functional modules and implemented as required, in other words, an inner structure of the apparatus is divided into different functional modules to implement all or a part of the functions described above. In addition, the media resource playing apparatus provided in the foregoing embodiment and the media resource playing method embodiments belong to a same concept. For a detailed implementation process, refer to the method embodiments. Details are not described herein again.

In the technical solution provided in this application, a media resource may be obtained and played through interaction between the target application client and the first media server, and a call procedure of the CT domain is not affected. In this way, a problem such as a call connection failure that may be caused in an interaction process is avoided, a media resource playing procedure is simplified, and communication efficiency is improved. A video customized ringback tone application is built in a terminal, and a video customized ringback tone service is implemented through an IT service during call establishment in the CT domain. The video customized ringback tone service can be expanded more flexibly when an IT network resource is not a bottleneck and a network delay is smaller.

FIG. 20 is a schematic diagram of a structure of a media resource playing apparatus according to an embodiment of this application. The apparatus is configured to perform the methods performed by the first media server in the foregoing embodiments. Refer to FIG. 20. The media resource playing apparatus includes a receiving module 2001, a determining module 2002, and a returning module 2003.

The receiving module 2001 is configured to receive a resource obtaining request sent by a calling terminal via a target application client, and obtain related information of the call carried in the resource obtaining request.

The determining module 2002 is configured to determine, based on the related information of the call, address information of a first media resource corresponding to the related information.

The returning module 2003 is configured to return the address information of the first media resource to the calling terminal.

In a possible implementation, the apparatus further includes a loading module, configured to perform step 605, step 705, step 805, step 1605, step 1705, or step 1805.

In a possible implementation, the apparatus further includes an authentication module, configured to perform step 603, step 703, step 803, step 1603, step 1703, or step 1803.

In a possible implementation, the authentication module is configured to perform the process of authenticating the calling number or the called number in step 603, step 703, step 803, step 1603, step 1703, or step 1803.

In a possible implementation, the apparatus further includes a closing module, configured to perform the process of closing the session in step 613 or step 1721.

In a possible implementation, the apparatus further includes a releasing module, configured to perform the process of releasing the resource in step 613.

It should be noted that, when the media resource playing apparatus provided in the foregoing embodiment plays a media resource, division into the foregoing functional modules is merely used as an example for illustration. In actual application, the foregoing functions may be allocated to different functional modules and implemented as required, in other words, an inner structure of the apparatus is divided into different functional modules to implement all or a part of the functions described above. In addition, the media resource playing apparatus provided in the foregoing embodiment and the media resource playing method embodiments belong to a same concept. For a detailed implementation process, refer to the method embodiments. Details are not described herein again.

In the technical solution provided in this application, a media resource may be obtained and played through interaction between the target application client and the first media server, and a call procedure of the CT domain is not affected. In this way, a problem such as a call connection failure that may be caused in an interaction process is avoided, a media resource playing procedure is simplified, and communication efficiency is improved. A video customized ringback tone application is built in a terminal, and a video customized ringback tone service is implemented through an IT service during call establishment in the CT domain. The video customized ringback tone service can be expanded more flexibly when an IT network resource is not a bottleneck and a network delay is smaller.

In an example embodiment, a computer storage medium is further provided. The computer storage medium may be a computer-readable storage medium, for example, a memory including program code. The program code may be executed by a processor in a terminal to implement the media resource playing method on the calling terminal side in the foregoing embodiments. For example, the computer-readable storage medium may be a ROM, a RAM, a compact disc read-only memory (compact disc read-only memory, CD-ROM), a magnetic tape, a floppy disk, or an optical data storage device.

In an example embodiment, a computer storage medium is further provided. The computer storage medium may be a computer-readable storage medium, for example, a memory including program code. The program code may be executed by a processor in a terminal to implement the media resource playing method on the first media server side in the foregoing embodiments. For example, the computer-readable storage medium may be a ROM, a RAM, a compact disc read-only memory (compact disc read-only memory, CD-ROM), a magnetic tape, a floppy disk, or an optical data storage device.

This application further provides a media resource playing system. The system includes a calling terminal and a first media server. In a possible implementation, the calling terminal and the first media server are respectively configured to perform the methods performed by the calling terminal and the first media server in the media resource playing methods provided in embodiments shown in FIG. 6A and FIG. 6B, FIG. 7, FIG. 8, FIG. 11, FIG. 12, FIG. 13, FIG. 16A and FIG. 16B, FIG. 17A and FIG. 17B, or FIG. 18A and FIG. 18B.

A person of ordinary skill in the art may understand that all or a part of the steps of the foregoing embodiments may be implemented by hardware or a program code related hardware. The program may be stored in a computer-readable storage medium. The storage medium may be a read-only memory, a magnetic disk, an optical disc, or the like.

It should be noted, a person of ordinary skill in the art may be aware that, in combination with the examples described in embodiments disclosed in this specification, units, modules, chips, and method steps can be implemented by electronic hardware, computer software, or a combination thereof. To clearly describe interchangeability between hardware and software, the foregoing has generally described compositions and steps of each example based on functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, module, unit, or chip, refer to the corresponding process in embodiments of the media resource playing method. Details are not described herein again.

In the several embodiments provided in this application, it can be understood that the disclosed system, apparatus, and method may be implemented in other manners. For example, the described apparatus embodiments are merely examples. For example, division into the modules or units in the apparatus is merely logical function division and may be other division in actual implementation. For example, a plurality of modules or units may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The modules or units described as separate parts may or may not be physically separate, and parts displayed as modules or units may or may not be physical modules or physical units, in other words, may be in one position, or may be distributed on a plurality of computer devices or chips. Some or all of the modules or units may be selected according to actual needs to achieve the objectives of the solutions of the embodiments of this application.

In addition, functional modules or units in embodiments of this application may be integrated into one target processing module, each of the modules or units may exist alone physically, or two or more modules or units may be integrated into one target processing module. The integrated module or unit may be implemented in a form of hardware, or may be implemented in a form of a software functional unit.

## Claims

1. A media resource playing method, applied to a calling terminal, wherein the method comprises:
initiating, by the calling terminal, a call to a called terminal;
sending a resource obtaining request to a first media server using a target application client installed on the calling terminal, wherein the resource obtaining request carries related information of the call, and wherein the target application client is a video customized ringback tone application that has function for playing media during call establishment;
receiving address information of a first media resource returned by the first media server based on the resource obtaining request, wherein the first media resource matches the related information; and
playing the first media resource based on the address information after receiving a ringing message,
wherein the first media server is a server in an internet technology, IT, domain, and
wherein before the playing the first media resource based on the address information after receiving a ringing message, if it is determined that a first media negotiation message is not received, performing the step of playing the first media resource, wherein the first media negotiation message is for performing media negotiation between a second media server and the calling terminal, and the second media server is in a communication technology, CT, domain, or
if it is determined that the first media negotiation message is received, playing a second media resource in the CT domain instead of the first media resource.

2. The method according to claim 1, wherein before the playing the first media resource based on the address information after receiving a ringing message, the method further comprises:
if setting information of the calling terminal indicates to play a media resource from the first media server, performing the step of playing the first media resource.

3. The method according to claim 1, wherein after the initiating, by the calling terminal, a call to a called terminal, the method further comprises:
if setting information of the calling terminal indicates to play media resources from the first media server and a second media server, playing a second media resource sent by the second media server.

4. The method according to claim 3, wherein the first media resource is played in a full-screen mode, and the second media resource is played in a floating window mode and a silent mode;
the second media resource is played in a full-screen mode, and the first media resource is played in a floating window mode and a silent mode; or
both the first media resource and the second media resource are played in a floating window mode, and at least one of the first media resource and the second media resource is in a silent mode.

5. The method according to any one of claims 1, 2, or 4, wherein the method further comprises:
displaying at least one interactive control on a play picture of a media resource; and
if an interaction operation on any interactive control is detected, sending an interaction request to the first media server based on the interaction operation via the target application client, wherein the interaction request carries an interaction object and interaction content.

6. The method according to any one of claims 1, 2, or 5, wherein after the playing the first media resource based on the address information after receiving a ringing message, the method further comprises:
if an off-hook message of the called terminal is received, stopping playing the first media resource; and
displaying a stop picture of the first media resource in a floating window.

7. The method according to claim 6, wherein after the displaying a stop picture of the first media resource in a floating window, the method further comprises any one of the following:
if a click operation on the floating window is detected, continuing to play the first media resource; or
if a click operation on the floating window is detected, displaying a portal website interface in the opened target application client.

8. A media resource playing method, applied to a calling terminal, a first media server and a second media server, wherein the method comprises:
initiating, by the calling terminal, a call to the called terminal, and sending, by the calling terminal, a resource obtaining request to the first media server using a target application client installed on the calling terminal, wherein the resource obtaining request carries related information of the call and wherein the target application client is a video customized ringback tone application that has function for playing media during call establishment;
receiving, by the first media server, the resource obtaining request sent by the calling terminal via the target application client, and obtaining the related information of the call carried in the resource obtaining request; determining, based on the related information of the call, address information of a first media resource corresponding to the related information; and returning the address information of the first media resource to the calling terminal; and
receiving, by the calling terminal, the address information of the first media resource returned by the first media server based on the resource obtaining request, wherein the first media resource matches the related information; and playing the first media resource based on the address information after receiving a ringing message,
wherein the first media server is a server in an internet technology, IT, domain, and
wherein before the playing the first media resource based on the address information after receiving the ringing message, if it is determined that a first media negotiation message is not received, performing the step of playing the first media resource, wherein the first media negotiation message is for performing media negotiation between the second media server and the calling terminal, and the second media server is in a communication technology, CT, domain, or
if it is determined that the first media negotiation message is received, playing a second media resource in the CT domain instead of the first media resource.

9. The method according to claim 8, wherein after the determining, based on the related information of the call, address information of a first media resource corresponding to the related information, the method further comprises:
pre-loading the first media resource.

10. The method according to claim 8 or 9, wherein before the determining, based on the related information of the call, address information of a first media resource corresponding to the related information, the method further comprises:
authenticating a user based on the related information, and if the authentication succeeds, performing the steps of determining the first media resource and the address information.

11. The method according to any one of claims 8 to 10, wherein after the returning the address information of the first media resource to the calling terminal, the method further comprises:
if a session end message of the calling terminal is received, closing a session between the first media server and the calling terminal, wherein the session end message indicates that a session ends.

12. A terminal, wherein the terminal comprises a processor (407) and a memory (402), and the memory stores at least one piece of program code; and the program code is loaded and executed by the processor (407) to implement the media resource playing method according to any one of claims 1 to 7.

13. A media resource playing system, comprising a calling terminal, a first media server and a second media server, whereinthe calling terminal is configured to initiate a call to a called terminal, and send a resource obtaining request to the first media server using a target application client installed on the calling terminal, wherein the resource obtaining request carries related information of the call, and wherein the target application client is a video customized ringback tone application that has function for playing media during call establishment;
the first media server is configured to receive the resource obtaining request sent by the calling terminal via the target application client, and obtain the related information of the call carried in the resource obtaining request; determine, based on the related information of the call, address information of a first media resource corresponding to the related information; and return the address information of the first media resource to the calling terminal; and
the calling terminal is further configured to receive the address information of the first media resource returned by the first media server based on the resource obtaining request, wherein the first media resource matches the related information of the call; and play the first media resource based on the address information after receiving a ringing message,
wherein the first media server is a server in an internet technology, IT, domain, and
wherein before the playing the first media resource based on the address information after receiving a ringing message, if it is determined that a first media negotiation message is not received, performing the step of playing the first media resource, wherein the first media negotiation message is for performing media negotiation between the second media server and the calling terminal, and the second media server is in a communication technology, CT, domain, or
if it is determined that the first media negotiation message is received, playing, by the the calling terminal, a second media resource in the CT domain instead of the first media resource.

## Patentansprüche

1. Verfahren zum Wiedergeben von Medienressourcen, das auf ein anrufendes Endgerät angewendet wird, wobei das Verfahren Folgendes umfasst:
Initiieren, durch das anrufende Endgerät, eines Anrufs für ein angerufenes Endgerät;
Senden einer Ressourcenerlangungsanforderung an einen ersten Medienserver unter Verwendung eines Zielanwendungs-Clients, der auf dem anrufenden Endgerät installiert ist, wobei die Ressourcenerlangungsanforderung zugehörige Informationen des Anrufs transportiert und wobei der Zielanwendungs-Client eine videoangepasste Ruftonanwendung ist, die eine Funktion zum Wiedergeben von Medien während eines Anrufaufbaus aufweist;
Empfangen von Adressinformationen einer ersten Medienressource, die von dem ersten Medienserver basierend auf der Ressourcenerlangungsanforderung zurückgegeben werden, wobei die erste Medienressource mit den zugehörigen Informationen übereinstimmt; und
Wiedergeben der ersten Medienressource basierend auf den Adressinformationen nach Empfangen einer Anrufnachricht,
wobei der erste Medienserver ein Server in einer Internettechnologie-Domäne, IT-Domäne, ist und
vor dem Wiedergeben der ersten Medienressource basierend auf den Adressinformationen nach dem Empfangen einer Anrufnachricht, wenn bestimmt wird, dass eine erste Medienaushandlungsnachricht nicht empfangen wird, Durchführen des Schritts des Wiedergebens der ersten Medienressource, wobei die erste Medienaushandlungsnachricht dem Durchführen von Medienaushandlung zwischen einem zweiten Medienserver und dem anrufenden Endgerät dient und sich der zweite Medienserver in einer Kommunikationstechnologie-Domäne, CT-Domäne, befindet oder
wenn bestimmt wird, dass die erste Medienaushandlungsnachricht empfangen wird, Wiedergeben einer zweiten Medienressource in der CT-Domäne anstelle der ersten Medienressource.

2. Verfahren nach Anspruch 1, wobei das Verfahren vor dem Wiedergeben der ersten Medienressource basierend auf den Adressinformationen nach dem Empfangen einer Anrufnachricht ferner Folgendes umfasst:
wenn Einstellungsinformationen des anrufenden Endgeräts angeben, dass eine Medienressource von dem ersten Medienserver wiederzugeben ist, Durchführen des Schritts des Wiedergebens der ersten Medienressource.

3. Verfahren nach Anspruch 1, wobei das Verfahren nach dem Initiieren, durch das anrufende Endgerät, eines Anrufs für ein angerufenes Endgerät ferner Folgendes umfasst:
wenn Einstellungsinformationen des anrufenden Endgeräts angeben, dass Medienressourcen von dem ersten Medienserver und einem zweiten Medienserver wiederzugeben sind, Wiedergeben einer zweiten Medienressource, die durch den zweiten Medienserver gesendet wird.

4. Verfahren nach Anspruch 3, wobei die erste Medienressource in einem Vollbildmodus wiedergegeben wird und die zweite Medienressource in einem schwebenden Fenstermodus und einem stillen Modus wiedergegeben wird;
die zweite Medienressource in einem Vollbildmodus wiedergegeben wird und die erste Medienressource in einem schwebenden Fenstermodus und einem stillen Modus wiedergegeben wird; oder
sowohl die erste Medienressource als auch die zweite Medienressource in einem schwebenden Fenstermodus wiedergegeben werden und sich mindestens eine der ersten Medienressource und der zweiten Medienressource in einem stillen Modus befindet.

5. Verfahren nach einem der Ansprüche 1, 2 oder 4, wobei das Verfahren ferner Folgendes umfasst:
Anzeigen mindestens einer interaktiven Steuerung auf einem Wiedergabebild einer Medienressource; und
wenn ein Interaktionsvorgang an einer beliebigen interaktiven Steuerung detektiert wird, Senden einer Interaktionsanforderung an den ersten Medienserver basierend auf dem Interaktionsvorgang über den Zielanwendungs-Client, wobei die Interaktionsanforderung ein Interaktionsobjekt und Interaktionsinhalt transportiert.

6. Verfahren nach einem der Ansprüche 1, 2 oder 5, wobei das Verfahren nach dem Wiedergeben der ersten Medienressource basierend auf den Adressinformationen nach dem Empfangen einer Anrufnachricht ferner Folgendes umfasst:
wenn eine Offhook-Nachricht des angerufenen Endgeräts empfangen wird, Beenden des Wiedergebens der ersten Medienressource; und
Anzeigen eines Stoppbilds der ersten Medienressource in einem schwebenden Fenster.

7. Verfahren nach Anspruch 6, wobei das Verfahren nach dem Anzeigen eines Stoppbilds der ersten Medienressource in einem schwebenden Fenster ferner eines des Folgenden umfasst:
wenn ein Klickvorgang auf dem schwebenden Fenster detektiert wird, Fortsetzen der Wiedergabe der ersten Medienressource; oder
wenn ein Klickvorgang auf dem schwebenden Fenster detektiert wird, Anzeigen einer Portalwebseitenschnittstelle in dem geöffneten Zielanwendungs-Client.

8. Verfahren zum Wiedergeben von Medienressourcen, das auf ein anrufendes Endgerät, einen ersten Medienserver und einen zweiten Medienserver angewendet wird, wobei das Verfahren Folgendes umfasst:
Initiieren, durch das anrufende Endgerät, eines Anrufs für das angerufene Endgerät und Senden, durch das anrufende Endgerät, einer Ressourcenerlangungsanforderung an den ersten Medienserver unter Verwendung eines Zielanwendungs-Clients, der auf dem anrufenden Endgerät installiert ist, wobei die Ressourcenerlangungsanforderung zugehörige Informationen des Anrufs transportiert und wobei der Zielanwendungs-Client eine videoangepasste Ruftonanwendung ist, die eine Funktion zum Wiedergeben von Medien während eines Anrufaufbaus aufweist;
Empfangen, durch den ersten Medienserver, der Ressourcenerlangungsanforderung, die durch das anrufende Endgerät über den Zielanwendungs-Client gesendet wird, und Erlangen der zugehörigen Informationen des Anrufs, die in der Ressourcenerlangungsanforderung transportiert werden;
Bestimmen, basierend auf den zugehörigen Informationen des Anrufs, von Adressinformationen einer ersten Medienressource, die den zugehörigen Informationen entspricht; und Zurückgeben der Adressinformationen der ersten Medienressource an das anrufende Endgerät; und
Empfangen, durch das anrufende Endgerät, der Adressinformationen der ersten Medienressource, die durch den ersten Medienserver basierend auf der Ressourcenerlangungsanforderung zurückgegeben werden, wobei die erste Medienressource mit den zugehörigen Informationen übereinstimmt; und Wiedergeben der ersten Medienressource basierend auf den Adressinformationen nach Empfangen einer Anrufnachricht,
wobei der erste Medienserver ein Server in einer Internettechnologie-Domäne, IT-Domäne, ist und
vor dem Wiedergeben der ersten Medienressource basierend auf den Adressinformationen nach dem Empfangen der Anrufnachricht, wenn bestimmt wird, dass eine erste Medienaushandlungsnachricht nicht empfangen wird, Durchführen des Schritts des Wiedergebens der ersten Medienressource, wobei die erste Medienaushandlungsnachricht dem Durchführen von Medienaushandlung zwischen dem zweiten Medienserver und dem anrufenden Endgerät dient und sich der zweite Medienserver in einer Kommunikationstechnologie-Domäne, CT-Domäne, befindet oder
wenn bestimmt wird, dass die erste Medienaushandlungsnachricht empfangen wird, Wiedergeben einer zweiten Medienressource in der CT-Domäne anstelle der ersten Medienressource.

9. Verfahren nach Anspruch 8, wobei das Verfahren nach dem Bestimmen, basierend auf den zugehörigen Informationen des Anrufs, von Adressinformationen einer ersten Medienressource, die den zugehörigen Informationen entspricht, ferner Folgendes umfasst:
Vorladen der ersten Medienressource.

10. Verfahren nach Anspruch 8 oder 9, wobei das Verfahren vor dem Bestimmen, basierend auf den zugehörigen Informationen des Anrufs, von Adressinformationen einer ersten Medienressource, die den zugehörigen Informationen entspricht, ferner Folgendes umfasst:
Authentifizieren eines Benutzers basierend auf den zugehörigen Informationen und, wenn die Authentifizierung erfolgreich ist, Durchführen der Schritte des Bestimmens der ersten Medienressource und der Adressinformationen.

11. Verfahren nach einem der Ansprüche 8 bis 10, wobei das Verfahren nach dem Zurückgeben der Adressinformationen der ersten Medienressource an das anrufende Endgerät ferner Folgendes umfasst:
wenn eine Sitzungsendnachricht des anrufenden Endgeräts empfangen wird, Schließen einer Sitzung zwischen dem ersten Medienserver und dem anrufenden Endgerät, wobei die Sitzungsendnachricht angibt, dass eine Sitzung endet.

12. Endgerät, wobei das Endgerät einen Prozessor (407) und einen Speicher (402) umfasst und der Speicher mindestens ein Stück Programmcode speichert; und der Programmcode durch den Prozessor (407) geladen und ausgeführt wird, um das Verfahren zum Wiedergeben von Medienressourcen nach einem der Ansprüche 1 bis 7 zu implementieren.

13. System zum Wiedergeben von Medienressourcen, umfassend ein anrufendes Endgerät, einen ersten Medienserver und einen zweiten Medienserver, wobei das anrufende Endgerät dazu konfiguriert ist, einen Anruf für das angerufene Endgerät zu initiieren und unter Verwendung eines Zielanwendungs-Clients, der auf dem anrufenden Endgerät installiert ist, eine Ressourcenerlangungsanforderung an den ersten Medienserver zu senden, wobei die Ressourcenerlangungsanforderung zugehörige Informationen des Anrufs transportiert und wobei der Zielanwendungs-Client eine videoangepasste Ruftonanwendung ist, die eine Funktion zum Wiedergeben von Medien während eines Anrufaufbaus aufweist;
wobei der erste Medienserver dazu konfiguriert ist, die Ressourcenerlangungsanforderung, die durch das anrufende Endgerät über den Zielanwendungs-Client gesendet wird, zu empfangen und die zugehörigen Informationen des Anrufs, die in der Ressourcenerlangungsanforderung transportiert werden, zu erlangen; basierend auf den zugehörigen Informationen des Anrufs Adressinformationen einer ersten Medienressource, die den zugehörigen Informationen entspricht, zu bestimmen; und die Adressinformationen der ersten Medienressource an das anrufende Endgerät zurückzugeben; und
das anrufende Endgerät ferner dazu konfiguriert ist, die Adressinformationen der ersten Medienressource, die durch den ersten Medienserver basierend auf der Ressourcenerlangungsanforderung zurückgegeben werden, zu empfangen, wobei die erste Medienressource mit den zugehörigen Informationen des Anrufs übereinstimmt; und die erste Medienressource basierend auf den Adressinformationen nach Empfangen einer Anrufnachricht wiederzugeben,
wobei der erste Medienserver ein Server in einer Internettechnologie-Domäne, IT-Domäne, ist und
vor dem Wiedergeben der ersten Medienressource basierend auf den Adressinformationen nach dem Empfangen einer Anrufnachricht, wenn bestimmt wird, dass eine erste Medienaushandlungsnachricht nicht empfangen wird, Durchführen des Schritts des Wiedergebens der ersten Medienressource, wobei die erste Medienaushandlungsnachricht dem Durchführen von Medienaushandlung zwischen dem zweiten Medienserver und dem anrufenden Endgerät dient und sich der zweite Medienserver in einer Kommunikationstechnologie-Domäne, CT-Domäne, befindet oder
wenn bestimmt wird, dass die erste Medienaushandlungsnachricht empfangen wird, Wiedergeben, durch das anrufende Endgerät, einer zweiten Medienressource in der CT-Domäne anstelle der ersten Medienressource.

## Revendications

1. Procédé de lecture de ressource de médias, appliqué à un terminal appelant, dans lequel le procédé comprend :
l'initialisation, par le terminal appelant, d'un appel vers un terminal appelé ;
l'envoi d'une demande d'obtention de ressources à un premier serveur de médias à l'aide d'un client d'application cible installé sur le terminal appelant, dans lequel la demande d'obtention de ressources transporte des informations relatives à l'appel, et dans lequel le client d'application cible est une application de tonalité de rappel vidéo personnalisée qui a une fonction de lecture de médias pendant l'établissement d'un appel ;
la réception d'informations d'adresse d'une première ressource de médias renvoyées par le premier serveur de médias sur la base de la demande d'obtention de ressource, dans lequel la première ressource de médias correspond aux informations relatives ; et
la lecture de la première ressource de médias sur la base des informations d'adresse après la réception d'un message de sonnerie,
dans lequel le premier serveur de médias est un serveur dans un domaine de technologie d'Internet, IT, et
dans lequel avant la lecture de la première ressource de médias sur la base des informations d'adresse après réception d'un message de sonnerie, s'il est déterminé qu'un premier message de négociation de médias n'est pas reçu, la réalisation de l'étape de lecture de la première ressource de médias, dans lequel le premier message de négociation de médias est destiné à réaliser une négociation de médias entre un second serveur de médias et le terminal appelant, et le second serveur de médias est dans un domaine de technologie de communication, CT, ou
s'il est déterminé que le premier message de négociation de médias est reçu, la lecture d'une seconde ressource de médias dans le domaine CT au lieu de la première ressource de médias.

2. Procédé selon la revendication 1, dans lequel, avant la lecture de la première ressource de médias sur la base des informations d'adresse après réception d'un message de sonnerie, le procédé comprend également :
si les informations de réglage du terminal appelant indiquent de lire une ressource de médias à partir du premier serveur de médias, la réalisation de l'étape de lecture de la première ressource de médias.

3. Procédé selon la revendication 1, dans lequel après l'initialisation, par le terminal appelant, d'un appel vers un terminal appelé, le procédé comprend également :
si les informations de réglage du terminal appelant indiquent de lire des ressources de médias à partir du premier serveur de médias et d'un second serveur de médias, la lecture d'une seconde ressource de médias envoyée par le second serveur de médias.

4. Procédé selon la revendication 3, dans lequel la première ressource de médias est lue en mode plein écran, et la seconde ressource de médias est lue en mode fenêtre flottante et en mode silencieux ;
la seconde ressource de médias est lue en mode plein écran, et la première ressource de médias est lue en mode fenêtre flottante et en mode silencieux ; ou
la première ressource de médias et la seconde ressource de médias sont toutes deux lues en mode fenêtre flottante, et au moins l'une de la première ressource de médias et de la seconde ressource de médias est en mode silencieux.

5. Procédé selon l'une quelconque des revendications 1, 2 ou 4, dans lequel le procédé comprend également :
l'affichage d'au moins une commande interactive sur une image de lecture d'une ressource de médias ; et
si une opération d'interaction sur une commande interactive est détectée, l'envoi d'une demande d'interaction au premier serveur de médias sur la base de l'opération d'interaction via le client d'application cible, dans lequel la demande d'interaction transporte un objet d'interaction et un contenu d'interaction.

6. Procédé selon l'une quelconque des revendications 1, 2 ou 5, dans lequel, après la lecture de la première ressource de médias sur la base des informations d'adresse après réception d'un message de sonnerie, le procédé comprend également :
si un message de décrochage du terminal appelé est reçu, l'arrêt de la lecture de la première ressource de médias ; et
l'affichage d'une image d'arrêt de la première ressource de médias dans une fenêtre flottante.

7. Procédé selon la revendication 6, dans lequel, après l'affichage d'une image d'arrêt de la première ressource de médias dans une fenêtre flottante, le procédé comprend également l'une quelconque des opérations suivantes :
si une opération de clic sur la fenêtre flottante est détectée, le fait de continuer à lire la première ressource de médias ; ou
si une opération de clic sur la fenêtre flottante est détectée, l'affichage d'une interface de site Web de portail dans le client d'application cible ouvert.

8. Procédé de lecture de ressource de médias, appliqué à un terminal appelant, à un premier serveur de médias et à un second serveur de médias, dans lequel le procédé comprend :
l'initialisation, par le terminal appelant, d'un appel au terminal appelé et l'envoi, par le terminal appelant, d'une demande d'obtention de ressources au premier serveur de médias à l'aide d'un client d'application cible installé sur le terminal appelant, dans lequel la demande d'obtention de ressources transporte des informations relatives à l'appel et dans lequel le client d'application cible est une application de tonalité de rappel vidéo personnalisée qui a une fonction de lecture de médias pendant l'établissement d'un appel ;
la réception, par le premier serveur de médias, de la demande d'obtention de ressources envoyée par le terminal appelant via le client d'application cible, et l'obtention des informations relatives à l'appel transportées dans la demande d'obtention de ressources ; la détermination, sur la base des informations relatives à l'appel, d'informations d'adresse d'une première ressource de médias correspondant aux informations relatives ;
et le renvoi des informations d'adresse de la première ressource de médias au terminal appelant ; et
la réception, par le terminal appelant, des informations d'adresse de la première ressource de médias renvoyées par le premier serveur de médias sur la base de la demande d'obtention de ressource, dans lequel la première ressource de médias correspond aux informations relatives ; et la lecture de la première ressource de médias sur la base des informations d'adresse après la réception d'un message de sonnerie,
dans lequel le premier serveur de médias est un serveur dans un domaine de technologie d'Internet, IT, et
dans lequel avant la lecture de la première ressource de médias sur la base des informations d'adresse après réception du message de sonnerie, s'il est déterminé qu'un premier message de négociation de médias n'est pas reçu, la réalisation de l'étape de lecture de la première ressource de médias, dans lequel le premier message de négociation de médias est destiné à réaliser une négociation de médias entre le second serveur de médias et le terminal appelant, et le second serveur de médias est dans un domaine de technologie de communication, CT, ou
s'il est déterminé que le premier message de négociation de médias est reçu, la lecture d'une seconde ressource de médias dans le domaine CT au lieu de la première ressource de médias.

9. Procédé selon la revendication 8, dans lequel après la détermination, sur la base des informations relatives à l'appel, des informations d'adresse d'une première ressource de médias correspondant aux informations relatives, le procédé comprend également :
le préchargement de la première ressource de médias.

10. Procédé selon la revendication 8 ou 9, dans lequel avant la détermination, sur la base des informations relatives à l'appel, des informations d'adresse d'une première ressource de médias correspondant aux informations relatives, le procédé comprend également :
l'authentification d'un utilisateur sur la base des informations relatives et, si l'authentification réussit, la réalisation des étapes de détermination de la première ressource de médias et des informations d'adresse.

11. Procédé selon l'une quelconque des revendications 8 à 10, dans lequel, après le renvoi des informations d'adresse de la première ressource de médias au terminal appelant, le procédé comprend également :
si un message de fin de session du terminal appelant est reçu, la fermeture d'une session entre le premier serveur de médias et le terminal appelant, dans lequel le message de fin de session indique qu'une session se termine.

12. Terminal, dans lequel le terminal comprend un processeur (407) et une mémoire (402) et la mémoire stocke au moins un élément de code de programme ; et le code de programme est chargé et exécuté par le processeur (407) pour mettre en œuvre le procédé de lecture de ressources de médias selon l'une quelconque des revendications 1 à 7.

13. Système de lecture de ressources de médias, comprenant un terminal appelant, un premier serveur de médias et un second serveur de médias, dans lequel le terminal appelant est configuré pour initier un appel vers un terminal appelé et envoyer une demande d'obtention de ressources au premier serveur de médias à l'aide d'un client d'application cible installé sur le terminal appelant, dans lequel la demande d'obtention de ressources transporte des informations relatives à l'appel et dans lequel le client d'application cible est une application de tonalité de rappel vidéo personnalisée qui a une fonction de lecture de médias pendant l'établissement d'un appel ;
le premier serveur de médias est configuré pour recevoir la demande d'obtention de ressources envoyée par le terminal appelant via le client d'application cible, et obtenir les informations relatives à l'appel transportées dans la demande d'obtention de ressources ; déterminer, sur la base des informations relatives à l'appel, des informations d'adresse d'une première ressource de médias correspondant aux informations relatives ; et renvoyer les informations d'adresse de la première ressource de médias au terminal appelant ; et
le terminal appelant est également configuré pour recevoir les informations d'adresse de la première ressource de médias renvoyées par le premier serveur de médias sur la base de la demande d'obtention de ressource, dans lequel la première ressource de médias correspond aux informations relatives à l'appel ; et lire la première ressource de médias sur la base des informations d'adresse après la réception d'un message de sonnerie,
dans lequel le premier serveur de médias est un serveur dans un domaine de technologie d'Internet, IT, et
dans lequel avant la lecture de la première ressource de médias sur la base des informations d'adresse après réception d'un message de sonnerie, s'il est déterminé qu'un premier message de négociation de médias n'est pas reçu, la réalisation de l'étape de lecture de la première ressource de médias, dans lequel le premier message de négociation de médias est destiné à réaliser une négociation de médias entre le second serveur de médias et le terminal appelant, et le second serveur de médias est dans un domaine de technologie de communication, CT, ou
s'il est déterminé que le premier message de négociation de médias est reçu, la lecture, par le terminal appelant, d'une seconde ressource de médias dans le domaine CT au lieu de la première ressource de médias.
